# EUROPEAN PATENT APPLICATION

(11) **EP 4 842 069 A1**
(43) Date of publication of application: **18.11.2026**
(21) Application number: 25755075.6
(22) Date of filing: 20.01.2025
(51) Int. Cl.: H04W 48/02, H04W 48/10, H04W 48/20, H04J 11/00, H04W 92/16

(54) **DEVICE AND METHOD FOR CONTROLLING CELL ACCESS IN WIRELESS COMMUNICATION SYSTEM**

(30) Priority: 15.02.2024 KR 20240022178; 28.06.2024 KR 20240085830
(71) Applicant: Samsung Electronics Co., Ltd., Suwon-si, Gyeonggi-do 16677 (KR)
(72) Inventor: SONG, Junhyuk, Suwon-si Gyeonggi-do 16677 (KR); KHO, Youngsung, Suwon-si Gyeonggi-do 16677 (KR); KIM, Chulmin, Suwon-si Gyeonggi-do 16677 (KR); LEE, Chungkeun, Suwon-si Gyeonggi-do 16677 (KR)
(74) Representative: Gulde & Partner
(86) International application number: PCT/KR2025/001062
(87) International publication number: WO 2025/173953

(57) **Abstract**

Provided in embodiments is a method performed by a near-real time (RT) radio access network intelligence controller (RIC). The method may comprise the steps of: generating an RIC control request message including an RIC control header information element (IE) and an RIC control message IE; and transmitting the RIC control request message to an E2 node. The RIC control header IE may include an RIC style type set to a value indicating radio access control, and a control action identifier (ID) set to a value indicating access barring control. The RIC control message IE may include one or more radio access network (RAN) parameters related to the access barring control.

## Description

### [Technical Field]

The present disclosure relates to a wireless communication system. The present disclosure relates to a device and a method for cell access control in the wireless communication system.

### [Background Art]

In order to meet the increasing demand for wireless data traffic after the commercialization of 4G (4^{th} generation) communication systems, efforts have been made to develop improved 5G (5^{th} generation) communication systems or pre-5G communication systems. For this reason, 5G communication systems or pre-5G communication systems are referred to as Beyond 4G Network communication systems or Post Long Term Evolution (LTE) systems.

To achieve high data transmission rates, the implementation of 5G communication systems in a millimeter wave (mmWave) band (e.g., 60 GHz band) is being considered. In order to mitigate a path loss of radio waves in the millimeter wave band and extend a propagation distance of the radio waves, beamforming, massive MIMO, Full Dimensional MIMO (FD-MIMO), array antenna, analog beam-forming, and large scale antenna technologies are being discussed in the 5G communication system.

In addition, in order to enhance network performance, technologies such as evolved small cells, advanced small cells, cloud radio access network (cloud RAN), ultra-dense network, device to device communication (D2D), wireless backhaul, moving network, cooperative communication, coordinated multi-points (CoMP), and interference cancellation are being developed in 5G communication systems.

In addition, advanced coding modulation (ACM) techniques such as hybrid frequency shift keying and quadrature amplitude modulation (FQAM) and sliding window superposition coding (SWSC) and advanced access technologies such as filter bank multi-carrier (FBMC), non-orthogonal multiple access (NOMA), and sparse code multiple access (SCMA) are being developed in the 5G systems.

With the commercialization of 5G systems and new radio or next radio (NR) to meet the demand for wireless data traffic, high-data-rate services are being provided to users through 5G systems, similar to 4G, and various wireless communication services, including Internet of Things (IoT) and services requiring high reliability for specific purposes, are expected to be provided. In a current system where the fourth-generation communication system and the fifth-generation communication system are mixed, open radio access network (O-RAN) established by operators and equipment providers defines E2 application protocol (E2AP) standard in an application protocol of E2 interface between an E2 node and a near-real-time (Near-RT) radio access network (RAN) intelligent controller (RIC).

Looking back at the development process of wireless communication generations, technologies have been developed mainly for services targeting humans, such as voice, multimedia, and data. After the commercialization of the 5^{th} Generation (5G) communication system, it is expected that the number of connected devices will increase explosively and be connected to communication networks. Examples of objects connected to the network include vehicles, robots, drones, home appliances, displays, smart sensors installed in various infrastructures, construction machinery, and factory equipment. Mobile devices are expected to evolve into various form factors, such as augmented reality glasses, virtual reality headsets, and holographic devices. In the 6^{th} Generation (6G) era, efforts are being made to develop an improved 6G communication system to connect hundreds of billions of devices and objects and provide various services. For this reason, the 6G communication system is referred to as a system beyond 5G.

In the 6^{th} Generation (6G) communication system, which is predicted to be realized around 2030, a maximum transmission speed is tera (i.e., 1,000 giga) bit per second (bps), and the wireless latency is 100 microseconds (µsec). That is, compared to the 5G communication system, a transmission speed in the 6G communication system is 50 times faster, and the wireless latency is reduced to one-tenth.

To achieve such high data transmission speed and ultra-low latency, the 6G communication system is being considered for implementation in a Terahertz (THz) band (e.g., such 95 Gigahertz (GHz) to 3 THz). The Terahertz band is expected to place greater importance on technologies that ensure signal reach distance, that is, coverage, due to more serious path loss and atmospheric absorption phenomena compared to the millimeter-wave (mmWave) band introduced in 5G. As key technologies to ensure coverage, multiple antenna transmission technologies such as radio frequency (RF) components, antennas, a new waveform superior to orthogonal frequency division multiplexing (OFDM) in terms of coverage, beamforming, massive multiple-input and multiple-output (massive MIMO), full dimensional MIMO (FD-MIMO), array antenna, and large-scale antenna need to be developed. In addition, to improve a coverage of terahertz band signals, new technologies such as metamaterial-based lenses and antennas, high-dimensional spatial multiplexing technology using orbital angular momentum (OAM), and reconfigurable intelligent surface (RIS) are being discussed.

In order to improve frequency efficiency and enhance the system network, the 6G communication system is developing technologies such as a full duplex technology, which enables the uplink and downlink to utilize simultaneously the same frequency resources, a network technology that integrally utilizes satellites and high-altitude platform stations (HAPS), a network structure innovation technology that supports mobile base stations and enables network operation optimization and automation, a dynamic spectrum sharing technology through collision avoidance based on spectrum usage prediction, an artificial intelligence (AI)-based communication technology that realizes system optimization by internalizing an end-to-end AI support function and utilizing AI from a design stage, and a next-generation distributed computing technology that realizes services with complexities that exceed limits of terminal computing capabilities by utilizing ultra-high-performance communication and computing resources (e.g., Mobile Edge Computing (MEC), cloud, and the like). In addition, efforts are continuously being made to strengthen connectivity between devices, further optimize the network, promote the softwareization of network entities, and increase the openness of wireless communication through the design of new protocols to be used in the 6G communication system, the implementation of hardware-based security environments, the development of mechanisms for the safe utilization of data, and the development of technologies for maintaining privacy.

Due to the research and development of the 6G communication system, it is expected that the next hyper-connected experience will become possible through the hyper-connectivity of the 6G communication system, which includes not only interconnection between objects but also connections between humans and objects. Specifically, the 6G communication system is expected to enable the provision of services such as truly immersive eXtended Reality (XR), high-fidelity mobile hologram, and digital replica. In addition, services such as remote surgery, industrial automation, and emergency response will be provided through the 6G communication system with enhanced security and reliability, which will be applied in various fields such as industry, healthcare, automotive, and home appliances.

In the 6G communication system, it is expected that functions of a RAN will be further subdivided and divided into a service subscriber form and a service provider form. In a service-based network, a subscription service acknowledgement procedure for a service subscription status will be applied to various functions.

The above-described information may be provided as a related art for the purpose of helping understanding of the present disclosure. No argument or decision is made as to whether any of the above description may be applied as a prior art related to the present disclosure.

### [Disclosure]

### [Technical Solution]

In embodiments, a method performed by a near-real time (RT) radio access network intelligence controller (RIC) is provided. The method may comprise generating a RIC control request message including a RIC control header information element (IE) and a RIC control message IE, and transmitting, to an E2 node, the RIC control request message. The RIC control header IE may include a RIC style type set to a value indicating radio access control and a control action identifier (ID) set to a value indicating access barring control. The RIC control message IE may include one or more radio access network (RAN) parameters related to the access barring control. The one or more RAN parameters may include at least one of a parameter indicating whether a cell is barred, a parameter for controlling cell selection and/or cell reselection for an intra-frequency cell in a case that a highest ranked cell is barred, a parameter indicating whether a cell is reserved for operator use, or a parameter indicating whether a cell is reserved for all public land mobile networks (PLMNs).

In embodiments, a method performed by an E2 node is provided. The method may comprise receiving, from a near-real time (RT) radio access network intelligence controller (RIC), a RIC control request message including a RIC control header information element (IE) and a RIC control message IE, and performing a procedure related to access barring control based on the RIC control request message. The RIC control header IE may include a RIC style type set to a value indicating radio access control and a control action identifier (ID) set to a value indicating the access barring control. The RIC control message IE may include one or more radio access network (RAN) parameters related to the access barring control. The one or more RAN parameters may include at least one of a parameter indicating whether a cell is barred, a parameter for controlling cell selection and/or cell reselection for an intra-frequency cell in a case that a highest ranked cell is barred, a parameter indicating whether a cell is reserved for operator use, or a parameter indicating whether a cell is reserved for all public land mobile networks (PLMNs).

In embodiments, a near-real time (RT) radio access network intelligence controller (RIC) is provided. The Near-RT RIC may include at least one processor including processing circuitry, and memory including one or more storage mediums storing instructions. The instructions, when executed by the at least one processor, may cause the Near-RT RIC to generate a RIC control request message including a RIC control header information element (IE) and a RIC control message IE, and transmit, to an E2 node, the RIC control request message. The RIC control header IE may include a RIC style type set to a value indicating radio access control and a control action identifier (ID) set to a value indicating access barring control. The RIC control message IE may include one or more radio access network (RAN) parameters related to the access barring control. The one or more RAN parameters may include at least one of a parameter indicating whether a cell is barred, a parameter for controlling cell selection and/or cell reselection for an intra-frequency cell in a case that a highest ranked cell is barred, a parameter indicating whether a cell is reserved for operator use, or a parameter indicating whether a cell is reserved for all public land mobile networks (PLMNs).

In embodiments, an E2 node is provided. The E2 node may include at least one processor including processing circuitry, and memory including one or more storage mediums storing instructions. The instructions, when executed by the at least one processor, may cause the E2 node to receive, from a near-real time (RT) radio access network intelligence controller (RIC), a RIC control request message including a RIC control header information element (IE) and a RIC control message IE, and perform a procedure related to access barring control based on the RIC control request message. The RIC control header IE may include a RIC style type set to a value indicating radio access control and a control action identifier (ID) set to a value indicating the access barring control. The RIC control message IE may include one or more radio access network (RAN) parameters related to the access barring control. The one or more RAN parameters may include at least one of a parameter indicating whether a cell is barred, a parameter for controlling cell selection and/or cell reselection for an intra-frequency cell in a case that a highest ranked cell is barred, a parameter indicating whether a cell is reserved for operator use, or a parameter indicating whether a cell is reserved for all public land mobile networks (PLMNs).

In embodiments, a method performed by an E2 node is provided. The method may comprise receiving, from a near-real time (RT) radio access network (RAN) intelligent controller (RIC), a RIC control request message.

In embodiments, a method performed by a near-real time (RT) radio access network (RAN) intelligent controller (RIC) is provided. The method may comprise transmitting, to an E2 node, a RIC control request message.

In embodiments, an electronic device of an E2 node is provided. The electronic device may comprise at least one processor, and memory storing instructions. The instructions, when executed by the at least one processor, may cause the E2 node to receive, from a real time (RT) radio access network (RAN) intelligent controller (RIC), a RIC control request message.

In embodiments, an electronic device of a near-real time (RT) radio access network (RAN) intelligent controller (RIC) is provided. The electronic device may comprise at least one processor, and memory storing instructions. The instructions, when executed by the at least one processor, may cause the Near-RT RIC to transmit, to an E2 node, a RIC control request message.

In embodiments, an electronic device of an E2 node is provided. The electronic device may comprise at least one transceiver and at least one processor. The at least one processor may be configured to receive, from a near-real time (RT) radio access network (RAN) intelligent controller (RIC), a RIC control request message through the at least one transceiver.

In embodiments, an electronic device of a near-real time (RT) radio access network (RAN) intelligent controller (RIC) is provided. The electronic device may include at least one transceiver and at least one processor. The at least one processor may be configured to cause the Near-RT RIC to transmit, to an E2 node, a RIC control request message through the at least one transceiver.

In embodiments, a non-transitory computer readable storage medium is provided. The non-transitory computer readable storage medium may include instructions that, when executed by a processor, cause an E2 node to perform operations comprising receiving, from a near-real time (RT) radio access network (RAN) intelligent controller (RIC), a RIC control request message.

In embodiments, a non-transitory computer readable storage medium is provided. The non-transitory computer readable storage medium may include instructions that, when executed by a processor, cause a near-real time (RT) radio access network (RAN) intelligent controller (RIC) to perform operations comprising transmitting, to an E2 node, a RIC control request message.

### [Description of the Drawings]

FIG. 1 illustrates an example of a core network of a 4^{th} generation (4G) long term evolution (LTE) communication system.
FIG. 2 illustrates an example of a core network of a 5^{th} generation (5G) communication system.
FIG. 3 illustrates an example of an architecture for O-RAN.
FIG. 4A illustrates an example of a connection between an E2 node and a radio access network intelligence controller (RIC) in a 5G communication system.
FIG. 4B illustrates a protocol stack of an E2 application protocol message.
FIG. 5 illustrates a configuration of an electronic device in a radio access network.
FIG. 6 illustrates a logical function related to an E2 message of an E2 node and a RIC in a radio access network.
FIG. 7 illustrates examples of a functional split between an E2 node and a RIC.
FIG. 8 illustrates an implementation example of an E2 node and a RIC.
FIG. 9 illustrates examples of a functional split between a central unit (CU) and a RIC.
FIGS. 10A and 10B illustrate examples of an E2 setup procedure.
FIGS. 11A and 11B illustrate examples of a RIC subscription procedure.
FIG. 12 illustrates an example of a RIC indication procedure.
FIGS. 13A and 13B illustrate examples of a RIC control procedure.
FIG. 14 illustrates an example of a radio access network.
FIG. 15 illustrates an example of access barring for energy saving.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to a signal (e.g., signal, information, message, signaling), terms referring to a data type (e.g., list, set, subset), terms for an operation state (e.g., step, operation, procedure), terms referring to data (e.g., packet, user stream, information, bit, symbol, codeword), terms referring to a resource (e.g., symbol, slot, subframe, radio frame, subcarrier, resource element (RE), resource block (RB), bandwidth part (BWP), occasion), terms referring to a channel, terms referring to network entities, terms referring to a component of a device, and the like, used in the following description, are exemplified for convenience of description. Accordingly, the present disclosure is not limited to the terms to be described below, and another term having an equivalent technical meaning may be used.

Terms referring to a configuration (e.g., setup, setting, arrangement, control), terms referring to a signal (e.g., packet, message, signal, information, signaling), terms referring to a resource (e.g., section, symbol, slot, subframe, radio frame, subcarrier, resource element (RE), resource block (RB), bandwidth part (BWP), occasion), terms for an operation state (e.g., step, operation, procedure), terms referring to data (e.g., packet, message, user stream, information, bit, symbol, codeword), terms referring to a channel, terms referring to network entities (e.g., distributed unit (DU), radio unit (RU), central unit (CU), CU-control plane (CP), CU-user plane (UP), open radio access network (O-RAN) DU (O-DU), O-RAN RU (O-RU), O-RAN CU (O-CU), O-RAN CU-UP (O-CU-UP), O-RAN CU-CP (O-CU-CP)), terms referring to a component of a device, and the like, used in the following description, are exemplified for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes various embodiments using terms used in some communication standards (e.g., 3rd Generation Partnership Project (3GPP), European Telecommunications Standards Institute (ETSI), an extensible radio access network (xRAN), and an open-radio access network (O-RAN)), but this is merely an example for description. Various embodiments of the present disclosure may be easily modified and applied in another communication system.

As 4^{th} generation (4G)/5^{th} generation (5G) communication systems (e.g., a new radio (NR)) have been commercialized, differentiated service support for a user in a virtualized network has been required. The 3GPP, which is a joint research project among organizations related to mobile communication, aims to prepare a standard for a third generation mobile communication system-which is applicable worldwide-within a scope of the IMT-2000 project of the International Telecommunication Union (ITU). The 3GPP was established in December 1998, and the 3GPP standard is based on an advanced GSM standard and includes all of radio, a core network, and a service architecture in a standardization scope. Accordingly, an open radio access network (O-RAN) newly defines a 3GPP network entity (NE) and a radio unit (RU), a digital unit (DU), a central unit (CU)-control plane (CP), and a CU-user plane (UP), which are nodes configuring a base station, as an O (O-RAN)-RU, an O-DU, an O-CU-CP, and an O-CU-UP, respectively, and additionally standardizes a near-real-time (NRT) radio access network intelligent controller (RIC). The present disclosure is for supporting an operator specific service model in an E2 interface in which the RIC requests a service from the O-DU, the O-CU-CP, or the O-CU-UP. Here, the O-RU, the O-DU, the O-CU-CP, and the O-CU-UP may be understood as entities configuring a RAN that may operate according to an O-RAN standard, and may be referred to as E2 nodes. An interface between the RIC and the E2 nodes with entities configuring the RAN, which may operate according to the O-RAN standard, uses an application protocol (E2AP).

The RIC is a logical node capable of collecting information related to the RAN. For example, the information related to the RAN may include information related to a cell site in which the terminal and the E2 node (e.g., the O-DU, the O-CU-CP, or the O-CU-UP) transmit and receive. The RIC may be implemented in a form of a server centrally disposed at one physical location. For example, a connection may be made through the Ethernet between the O-DU and the RIC, between the O-CU-CP and the RIC, and between the O-CU-UP and the RIC. For this, an interface standard for communication between the O-DU and the RIC, between the O-CU-CP and the RIC, and between the O-CU-UP and the RIC has become necessary, and a definition of message standards such as an E2-DU, an E2-CU-CP, and an E2-CU-UP and procedures between the O-DU, the O-CU-CP, and the O-CU-UP and the RIC is required. In particular, differentiated service support for a user in a virtualized network is required. By concentrating a call processing message/function generated in O-RAN on the RIC, a function definition of a message of the E2-DU, the E2-CU-CP, and the E2-CU-UP for supporting a service for wide cell coverage is required.

The RIC may perform communication with the E2 node (e.g., the O-DU, the O-CU-CP, and/or the O-CU-UP) using the E2 interface. For example, the RIC may set an event occurrence condition through a subscription procedure with the E2 node. The RIC may set a call processing event by generating a subscription Request message and delivering the E2 subscription request message to the E2 node. After the call processing event is set, the E2 node may deliver a subscription response message to the RIC. The E2 node may establish services provided by the Near-RT RIC. For example, the E2 node may transmit a RIC indication message (e.g., report information) to the RIC according to the subscription procedure. For example, the RIC may provide control for the E2 node (e.g., the O-DU, the O-CU-CP, or the O-CU-UP) using a RIC control message.

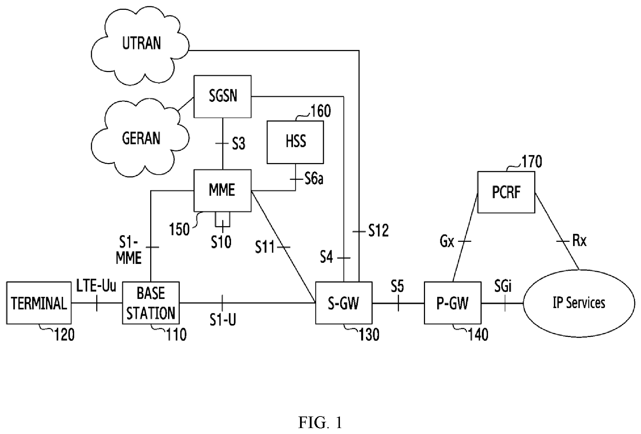

FIG. 1 illustrates an example of a core network of a 4^{th} generation (4G) long term evolution (LTE) communication system.

Referring to FIG. 1, the LTE communication system may include a base station 110, a terminal 120, a serving gateway (S-GW) 130, a packet data network gateway (P-GW) 140, a mobility management entity (MME) 150, a home subscriber server (HSS) 160, and a policy and charging rule function (PCRF) 170.

The base station 110 is a network infrastructure that provides wireless access to the terminal 120. For example, the base station 110 is a device that performs scheduling by collecting state information, such as a buffer state, available transmission power, and a channel state of the terminal 120. The base station 110 has coverage defined as a certain geographical region based on a distance at which a signal may be transmitted. The base station 110 is connected to the MME 150 through an S1-MME interface. In addition to a base station, the base station 110 may be referred to as an 'access point (AP)', an 'eNodeB (eNB)', a 'wireless point', a 'transmission/reception point (TRP)', a RAN node, or another term having an equivalent technical meaning.

The terminal 120 is a device used by a user and performs communication with the base station 110 through a wireless channel. In some cases, the terminal 120 may be operated without involvement of the user. That is, the terminal 120 is a device that performs machine type communication (MTC) and may not be carried by the user. In addition to a terminal, the terminal 120 may be referred to as 'user equipment (UE)', a 'mobile station', a 'subscriber station', 'customer-premises equipment (CPE)', a 'remote terminal', a 'wireless terminal', a 'user device', or another term having an equivalent technical meaning.

The S-GW 130 provides a data bearer, and generates or controls the data bearer according to control of the MME 150. For example, the S-GW 130 processes a packet arriving from the base station 110 or a packet to be forwarded to the base station 110. In addition, the S-GW 130 may perform an anchoring role during handover of the terminal 120 between base stations. The P-GW 140 may function as a connection point with an external network (e.g., an Internet network). In addition, the P-GW 140 assigns an Internet Protocol (IP) address to the terminal 120 and performs an anchoring role for the S-GW 130. In addition, the P-GW 140 may apply a quality of service (QoS) policy of the terminal 120 and manage account data.

The MME 150 manages mobility of the terminal 120. In addition, the MME 150 may perform authentication for the terminal 120, bearer management, and the like. That is, the MME 150 is responsible for mobility management and various control functions for the terminal. The MME 150 may link with a serving GPRS support node (SGSN).

The HSS 160 stores key information and a subscriber profile for authentication of the terminal 120. The key information and the subscriber profile are delivered from the HSS 160 to the MME 150 when the terminal 120 accesses a network.

The PCRF 170 defines a rule for policy and charging. The stored information is delivered from the PCRF 170 to the P-GW 140, and the P-GW 140 may perform control (e.g., QoS management, charging, and the like) for the terminal 120 based on the information provided from the PCRF 170.

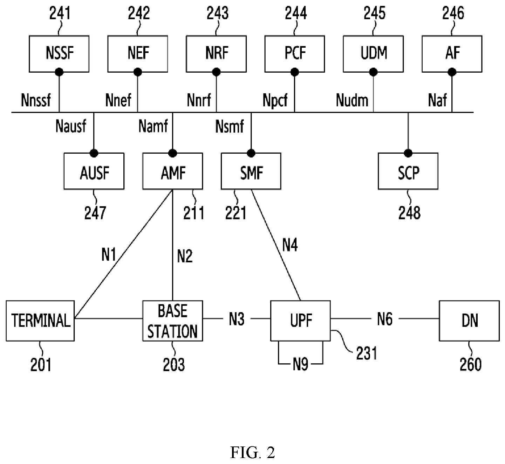

FIG. 2 illustrates an example of a core network of a 5^{th} generation (5G) communication system.

Referring to FIG. 2, the 5G communication system may include a terminal 201, a base station 203, an access and mobility management function (AMF) 211, a session management function (SMF) 221, and a user plane function (UPF) 231. For the terminal 201, descriptions of the terminal 120 of FIG. 1 may be referred to. For the base station 203, a description of the base station 110 may be referred to. The base station 203 may be connected to the AMF 211 through an N2 interface and connected to the UPF 231 through an N3 interface. In addition to a base station, the base station 203 may be referred to as an 'access point (AP)', a 'radio access network (RAN) node', a '5th generation (5G) node', a 'next generation nodeB (gNB)', a 'wireless point', a 'transmission/reception point (TRP)', a 'communication node', a 'wireless communication device', 'wireless communication equipment', a 'network node', a 'network entity', or another term having an equivalent technical meaning. The AMF 211 may provide a function related to mobility management of the terminal 201, registration of a user, authentication, connection establishment, and/or release. The SMF 221 may manage a session and service quality (e.g., quality of service (QoS)) of the terminal 201 in a user plane, and generate and manage a PDU session tunnel using GPT tunneling between the UPF 231 and the base station 203. The UPF 231 may perform a role of processing and routing a user data packet, and provide appropriate processing through classification and prioritization of traffic as necessary. In addition, the UPF 231 may transmit packets through an Internet network by being connected to a data network 260.

An entity between the terminal 201 and the base station 203 may be referred to as an access network or a RAN. A set of network entities connected to the base station 203 may be referred to as a 5G core network. The 5G core network may include various network functions (NFs), in addition to the AMF 211, the SMF 221, and the UPF 223. For example, the 5G core network may include a network slice selection function (NSSF) 241, a network exposure function (NEF) 242, a network repository function (NRF) 243, a policy control function (PCF) 244, unified data management (UDM) 245, an application function (AF) 246, an authentication server function (AUSF) 247, and/or a service capability exposure function (SCP) 248. The NSSF 241 may provide selection of a network slice suitable for a user (e.g., the terminal 201). The NEF 242 may provide implementation of a service by allowing a service provider to access a network resource and a network function. The NRF 243 may perform a role of a database capable of searching for and finding a service and a function in a network. The PCF 244 may manage and control service quality and a policy in the network. The UDM 245 may manage and provide a profile and subscription information of the user. The AF 246 may manage network access and resource allocation for a specific service or application. The AUSF 247 may manage authentication information of the user and perform an authentication procedure. The SCP 248 may expose a service function of the network to an external application and support provision of a service.

A base station (e.g., the base station 203) may be implemented in a distributed deployment according to a central unit (CU) (or a control unit) configured to perform functions (e.g., packet data convergence protocol (PDCP) and radio resource control (RRC)) of an upper layer of an access network and a distributed unit (DU) configured to perform a function of a lower layer. For example, between a core network (e.g., a 5G core (5GC) or a next generation core (NGC)) and a radio network (RAN), the base station may be implemented in a structure in which a CU and a DU are disposed in order (or a CU, a DU, and an RU are disposed in order). An interface between the CU and the DU may be referred to as an F1 interface. The CU may be responsible for a function of a layer higher than the DU by being connected to one or more DUs. For example, the CU may be responsible for functions of a radio resource control (RRC) layer and functions of a packet data convergence protocol (PDCP) layer, and the DU (or the DU and the RU) may be responsible for a function of a lower layer. The DU may perform functions of a radio link control (RLC) layer, functions of a media access control (MAC) layer, and functions of a physical (PHY) layer. As a non-limiting example, if the DU is connected to a radio unit (RU), the DU may perform a portion of functions (high PHY) among the functions of the physical layer, and the RU may be responsible for remaining functions (low PHY) of the PHY layer.

Carrier aggregation (hereinafter, 'CA') technology is a technology for increasing frequency utilization efficiency from a perspective of a terminal or a base station by combining a plurality of component carriers and by one terminal simultaneously using such a plurality of component carriers to transmit and receive signals. Specifically, according to the CA technology, the terminal (e.g., the terminal 120 or the terminal 201) and the base station (e.g., the base station 110 or the base station 203) may transmit and receive signals using a wideband by using a plurality of component carriers in an uplink (UL) and a downlink (DL), respectively, and, at this time, each component carrier is located in a different frequency band. Hereinafter, the uplink means a communication link through which the terminal transmits a signal to the base station, and the downlink means a communication link through which the base station transmits a signal to the terminal. At this time, the number of uplink component carriers and the number of downlink component carriers may be different from each other.

Dual connectivity or multi connectivity technology is a technology for increasing frequency utilization efficiency from a perspective of a terminal or a base station by one terminal being connected to a plurality of different base stations and by simultaneously using carriers in each of the plurality of base stations located in different frequency bands to transmit and receive signals. The terminal may transmit and receive traffic by being simultaneously connected to a first base station (e.g., a base station providing a service using LTE technology or fourth generation mobile communication technology) (e.g., the base station 110) and a second base station (e.g., a base station providing a service using new radio (NR) technology or 5^{th} generation (5G) mobile communication technology) (e.g., the base station 203). At this time, frequency resources used by each base station may be located in different bands. For example, a scheme operating based on a dual connectivity scheme of LTE and NR based on an LTE core network (e.g., an evolved packet core (EPC)) may be referred to as 5G non-standalone (NSA). For example, in the 5G communication system, a scheme operating through 5G technology (or LTE technology and 5G technology) based on the 5G core network may be referred to as 5G standalone (SA).

Currently, considering services that 5G mobile communication technology intended to support, discussions for improvement of initial 5G mobile communication technology and performance enhancement are in progress, and physical layer standardization is in progress for technologies such as Vehicle-to-Everything (V2X) for helping a driving determination of an autonomous vehicle and increasing convenience of a user based on its own location and state information transmitted by a vehicle, New Radio Unlicensed (NR-U) aimed at system operation satisfying various regulatory requirements in an unlicensed band, NR terminal low power consumption technology (UE Power Saving), a non-terrestrial network (NTN), which is direct terminal-satellite communication for securing coverage in an area in which communication with a terrestrial network is impossible, and positioning.

In addition, standardization in a radio interface architecture/protocol field is also in progress for technologies such as an intelligent factory (Industrial Internet of Things (IIoT)) for supporting a new service through linkage and convergence with another industry, Integrated Access and Backhaul (IAB) providing a node for expansion of a network service area by integrally supporting a wireless backhaul link and an access link, mobility enhancement technology (Mobility Enhancement) including Conditional Handover and Dual Active Protocol Stack (DAPS) handover, and 2-step random access (2-step RACH for NR) simplifying a random access procedure, and standardization in a system architecture/service field is also in progress for a 5G baseline architecture (e.g., Service based Architecture and Service based Interface) for application of Network Functions Virtualization (NFV) and Software-Defined Networking (SDN) technologies, mobile edge computing (MEC) through which a service is provided based on a location of a terminal, and the like.

When such a 5G mobile communication system is commercialized, connected devices, which are explosively increasing, will be connected to a communication network, and accordingly, enhancement of functions and performance of the 5G mobile communication system and integrated operation of the connected devices are expected to be necessary. For this, new research will be conducted on extended reality (XR) for efficiently supporting augmented reality (AR), virtual reality (VR), mixed reality (MR), and the like, 5G performance improvement and complexity reduction using artificial intelligence (AI) and machine learning (ML), AI service support, metaverse service support, drone communication, and the like.

In addition, such development of the 5G mobile communication system may become a basis for development of a new waveform for ensuring coverage in a terahertz band of 6G mobile communication technology, multiple antenna transmission technologies such as full dimensional MIMO (FD-MIMO), an array antenna, and a large scale antenna, a metamaterial-based lens and antenna for improving coverage of a terahertz band signal, high-dimensional spatial multiplexing technology using orbital angular momentum (OAM), and reconfigurable intelligent surface (RIS) technology, as well as full duplex technology for improving frequency efficiency and a system network of the 6G mobile communication technology, AI-based communication technology for realizing system optimization by utilizing a satellite and artificial intelligence (AI) from a design stage and internalizing an end-to-end AI support function, and next-generation distributed computing technology for realizing a service having complexity exceeding a limitation of terminal computing capability by utilizing ultra-high-performance communication and computing resources.

Although FIGS. 1 to 2 have been described as examples in a 4G and/or 5G environment, these descriptions do not limit a scope of a communication environment of embodiments of the present disclosure. A technical principle according to embodiments of the present disclosure may also be applied to communication technologies and network environments of 6G and beyond 6G.

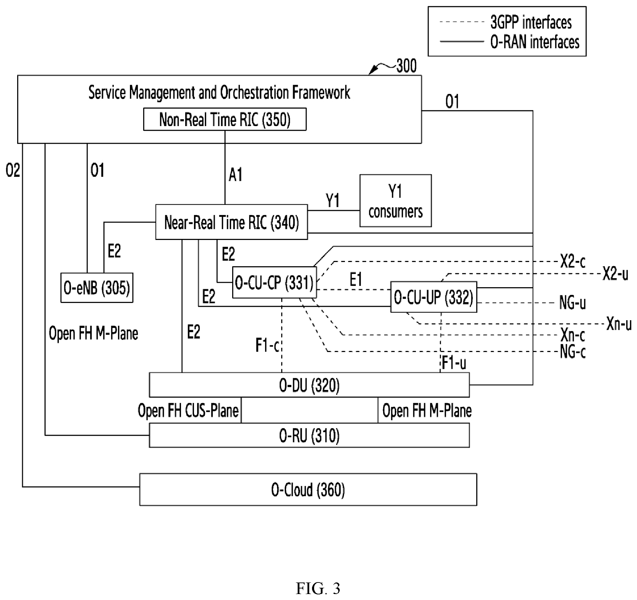

FIG. 3 illustrates an example of an architecture for O-RAN.

Referring to FIG. 3, a logical architecture of the O-RAN may include a service management orchestration (SMO) 300, an O-eNB 305, an O-RU 310, an O-DU 320, an O-CU-CP 331, an O-CU-UP 332, a Near-RT RIC 340, and a Non-RT RIC 350.

Among various management domains (e.g., RAN management, core management, transport management, and end-to-end (E2E) slice management) in a network of a service provider, the SMO 300 may be responsible for the RAN management. For the RAN management, the SMO 300 may provide a fault, configuration, accounting, performance, and security (FCAPS) interface and RAN optimization using the Non-RT RIC 350.

The O-eNB 305 may be a node providing an access network in an LTE communication system. For the O-eNB 305, descriptions of the base station 110 of FIG. 1 may be referred to. The O-RU 310, the O-DU 320, the O-CU-CP 331, and the O-CU-UP 332 may be network entities (or nodes) for providing an access network in an NR communication system. For the O-RU 310, the O-DU 320, the O-CU-CP 331, and the O-CU-UP 332, descriptions of the base station 203 of FIG. 2 may be referred to.

The Near-RT RIC 340 is a logical node for customizing RAN functionality for a new service or regional resource optimization. The Near-RT RIC 340 may provide functions such as network intelligence (e.g., policy enforcement and handover optimization), resource assurance (e.g., radio-link management and an advanced self-organized-network (SON)), and resource control (e.g., load balancing and a slicing policy). The Near-RT RIC 340 may collect traffic information (e.g., traffic load and user-specific QoS) and/or system configuration information (e.g., the Near-RT RIC 340 may collect traffic information from the E2 node through the E2 interface). The Near-RT RIC 340 may infer/predict/set/configure an advanced sleep mode (ASM) activation policy and system configurations. The Near-RT RIC 340 may be connected to the O-eNB 305, the O-CU-CP 331, the O-CU-UP 332, and/or the O-DU 320. The Near-RT RIC 340 may perform communication with the O-eNB 305, the O-CU-CP 331, the O-CU-UP 332, and/or the O-DU 320. The RIC 340 may be connected to each node through an E2 interface. In addition, an interface between the O-CU-CP 331 and the O-DU 320 may be referred to as an F1-c interface. An interface between the O-CU-UP 332 and the O-DU 320 may be referred to as an F1-u interface. In the following description, a DU and an O-DU, a CU-CP and an O-CU-CP, and a CU-UP and an O-CU-UP may be interchangeably used.

The Non-RT RIC 350 may perform communication with the Near-RT RIC 340 through an A1 interface by being implemented in the SMO 300. Through the A1 interface, a policy management service, an enrichment information service, and a machine learning (ML) model management service (e.g., ML model deployment) may be provided. The Non-RT RIC 350 may drive content delivered through the A1 interface. For example, the Non-RT RIC 350 may train an AI/ML model based on data (e.g., traffic load, user-specific QoS, and system configuration information) from an O1 interface.

The O-Cloud 360 is a cloud computing platform composed of a set of physical infrastructure nodes satisfying O-RAN requirements for hosting related O-RAN functions (e.g., the Near-RT RIC 340, the O-CU-CP 331, the O-CU-UP 332, and the O-DU 320), supporting software components (e.g., an operating system, a virtual machine monitor, a container runtime, and the like), and/or appropriate management and orchestration functions.

In FIG. 3, the O-CU-CP 331 and the O-CU-UP 332 are respectively illustrated according to a split of a control plane and a user plane, but embodiments of the present disclosure are not limited thereto. As a non-limiting example, the O-CU-CP 331 and the O-CU-UP 332 may be understood as one O-CU 330. In addition, FIG. 3 illustrates one Near-RT RIC 340, but, according to various embodiments, a plurality of Near-RT RICs may exist for an O-RAN architecture. The plurality of Near-RT RICs may be implemented as a plurality of hardware located at the same physical location or may be implemented through virtualization using one hardware.

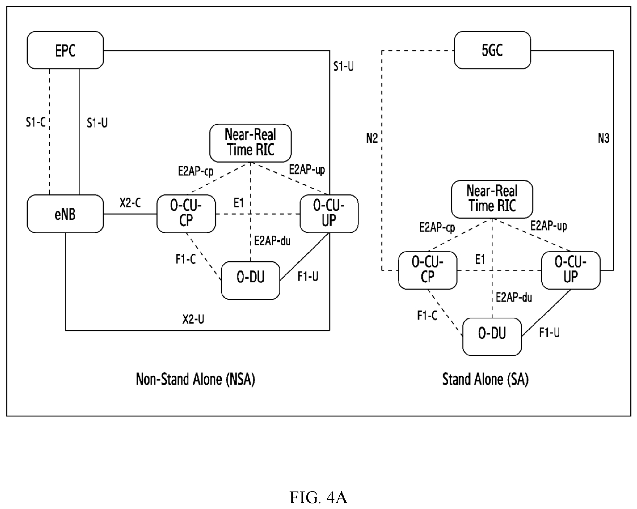

FIG. 4A illustrates an example of a connection between an E2 node and a radio access network intelligence controller (RIC) in a 5G communication system.

Referring to FIG. 4A, the 5G communication system may provide deployment of entities according to a non-standalone mode (e.g., non-standalone (NSA)) or a standalone mode (e.g., standalone (SA)). Network entities configuring a base station (e.g., the base station 110 or the base station 203) may be referred to as E2 nodes, and each network entity may have deployments according to the non-standalone mode or may have deployment according to the standalone mode. For example, in the non-standalone mode, dual connectivity using an eNB and the E2 node may be provided to a terminal. Such dual connectivity using LTE and NR may be referred to as evolved universal terrestrial radio access (E-UTRA)-NR dual connectivity (EN-DC). A CU-CP, a CU-UP, and a DU for operating as a gNB may be referred to as an O-CU-CP 331, an O-CU-UP 332, and an O-DU 320, respectively, by being connected to a Near-RT RIC (e.g., the Near-RT RIC 340) in an O-RAN architecture. For example, in the standalone mode, the E2 nodes may be independently connected to a 5GC. The E2 nodes may be referred to as the O-CU-CP 331, the O-CU-UP 332, and/or the O-DU 320 in the O-RAN architecture. The O-CU-CP 331 may be connected to an AMF (e.g., the AMF 211) in the 5GC through an N2 interface. The O-CU-UP 332 may be connected to a UPF (e.g., the UPF 231) in the 5GC through an N3 interface.

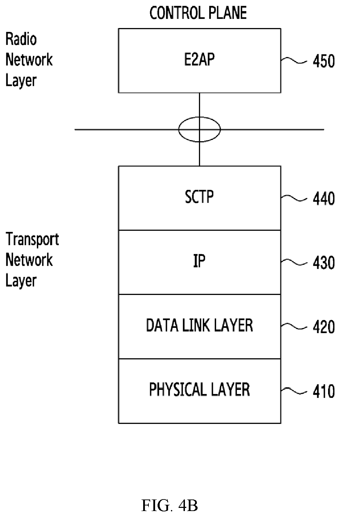

FIG. 4B illustrates a protocol stack of an E2 application protocol message.

Referring to FIG. 4B, a control plane includes a transport network layer and a radio network layer. The transport network layer includes a physical layer 410, a data link layer 420, an internet protocol (IP) 430, and a stream control transmission protocol (SCTP) 440.

The radio network layer includes an E2AP 450. The E2AP 450 is used to deliver a subscription request message / subscription response message, an indication message, a control message, a service update message, and a service query message, and is transmitted at a higher layer of the SCTP 440 and the IP 430.

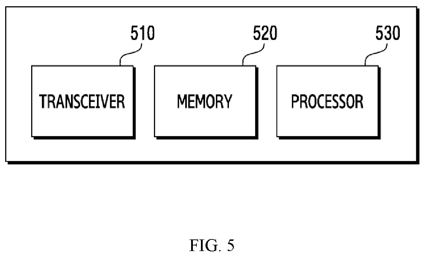

FIG. 5 illustrates a configuration of an electronic device in a radio access network. The structure illustrated in FIG. 5 may be understood as a configuration of an electronic device having a function of at least one of the Near-RT RIC 340, the Non-RT RIC 350, the O-CU-CP 331, the O-CU-UP 332, the O-DU 320, and/or the O-eNB 305 illustrated through FIG. 3. The electronic device may be referred to as a network device. Terms such as '...unit' and '...device' used below mean a unit that processes at least one function or operation, and may be implemented as hardware or software, or a combination of hardware and software.

Referring to FIG. 5, the electronic device may include a transceiver 510, memory 520, and a processor 530.

The transceiver 510 provides an interface for performing communication with other electronic devices in a network. That is, the transceiver 510 converts a bit stream transmitted from the electronic device to another electronic device into a physical signal, and converts the physical signal received from the another electronic device into a bit stream. That is, the transceiver 510 may transmit or receive a signal. Accordingly, the transceiver 510 may be referred to as a modem, a communication unit, a transmit unit, a receive unit, or a transmit/receive unit. At this time, the transceiver 510 enables the electronic device to communicate with other electronic devices or a system through a backhaul connection (e.g., a wired backhaul or a wireless backhaul) or through a network. The transceiver 510 may include one or more transceivers.

The memory 520 stores data such as a basic program, an application program, and setting information for an operation of the electronic device. The memory 520 may be configured of a volatile memory, a non-volatile memory, or a combination of the volatile memory and the non-volatile memory. In addition, the memory 520 provides stored data according to a request of the processor 530. The memory 520 may be referred to as a storage unit.

The processor 530 controls overall operations of the electronic device. For example, the processor 530 transmits and receives a signal through the transceiver 510. In addition, the processor 530 records data in and reads data from the memory 520. The processor 530 may be referred to as a controller. For this, the processor 530 may be configured with a plurality of processors or may include at least one sub-processor. According to various embodiments, the processor 530 may control the electronic device to perform operations according to various embodiments described in the present disclosure.

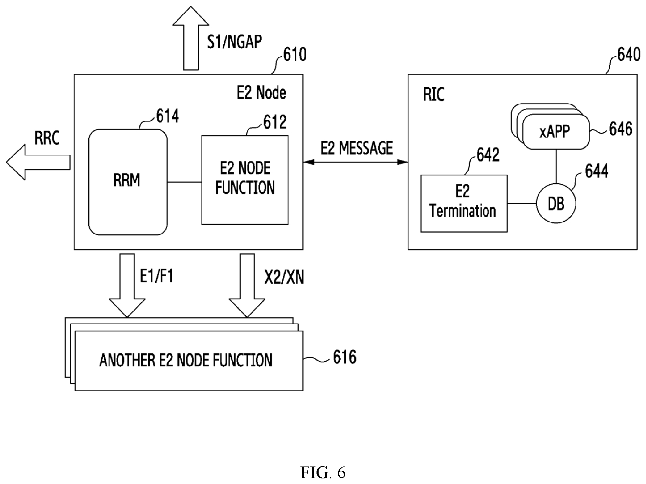

FIG. 6 illustrates a logical function related to an E2 message of an E2 node and a RIC in a radio access network. The RIC 640 of FIG. 6 may exemplify the Near-RT RIC 340. The descriptions regarding the Near-RT RIC 340 of FIG. 3 may also be applied to the RIC 640. The E2 node 610 of FIG. 6 may exemplify one of the O-eNB 305, the O-CU-CP 331, the O-CU-UP 332, the O-DU 320, or a base station (e.g., the base station 101 or the base station 203) of FIG. 3. The descriptions regarding each entity of FIG. 3 may also be applied to the E2 node 610.

Referring to FIG. 6, a RIC 640 and an E2 node 610 may transmit or receive an E2 message to or from each other. For example, the E2 node 610 may be an O-eNB 305, an O-CU-CP 331, an O-CU-UP 332, an O-DU 320, or a base station (e.g., the base station 101 or the base station 203). A communication interface of the E2 node 620 may be determined according to a type of the E2 node 610. For example, the E2 node 610 may perform communication with another E2 node 616 through an E1 interface or an F1 interface. Alternatively, for example, the E2 node 610 may perform communication with the another E2 node 616 through an X2 interface or an XN interface. Alternatively, for example, the E2 node 610 may perform communication with a core network entity through an S1 interface or a next generation application protocol (NGAP) interface (e.g., an interface between the next generation (NG) base station 203 and the AMF 211).

The E2 node 610 may include an E2 node function 612. The E2 node function 612 is a function corresponding to specific application S/W (xApp) 646 installed in the RIC 640. For example, in a case of a KPI monitor, KPI monitor collection S/W is installed in the RIC 640, and the E2 node 610 may include the E2 node function 612 that generates KPI parameters and then delivers an E2 message including a KPI parameter to an E2 termination 642 located in the RIC 640. The E2 node 610 may include radio resource management (RRM) 614. The E2 node 610 may manage resources provided to a radio network for a terminal.

The E2 termination 642 located in the RIC 640, which is a termination of the RIC 640 for the E2 message, performs a function of interpreting the E2 message delivered by the E2 node 610 and then delivering the E2 message to the xApp 646. A database (DB) 644 located in the RIC 640 may be used for the E2 termination 642 or the xApp 646.

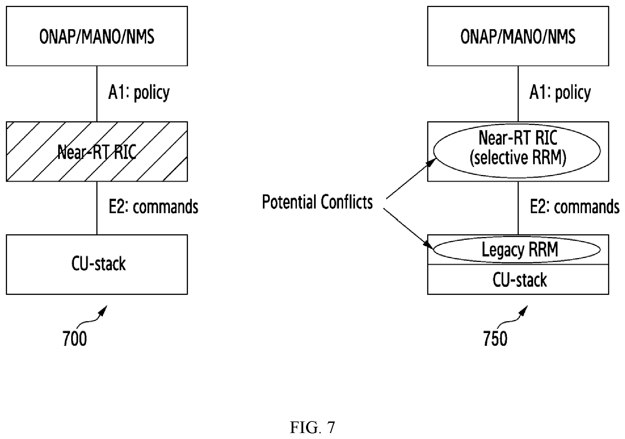

FIG. 7 illustrates examples of a functional split between an E2 node (e.g., the O-eNB 305, the O-CU-CP 331, the O-CU-UP 332, the O-DU 320, or a base station (e.g., the base station 110 or the base station 203)) and a RIC. A RAN standard may provide a functional split between the E2 node and the RIC. For example, the E2 node may be a CU (e.g., the CU 330, the CU-CP 331, or the CU-UP 332). The RIC may be a Near RT RIC 340. The Near RT RIC 340 may be connected to an SMO 300 (e.g., an open network automation platform (ONAP)/management and orchestration (MANO)/a network management system (NMS)) through an A1 interface. For example, the Near RT RIC 340 may be connected to a Non-RT RIC 350 of the SMO 300. The RIC may be connected to the E2 node through an E2 interface. Possible functional split options may include a functional split 700 in which the entire radio resource management (RRM) is managed in the Near-RT RIC 340 and a functional split 750 in which the RRM is selectively managed in the Near-RT RIC 340.

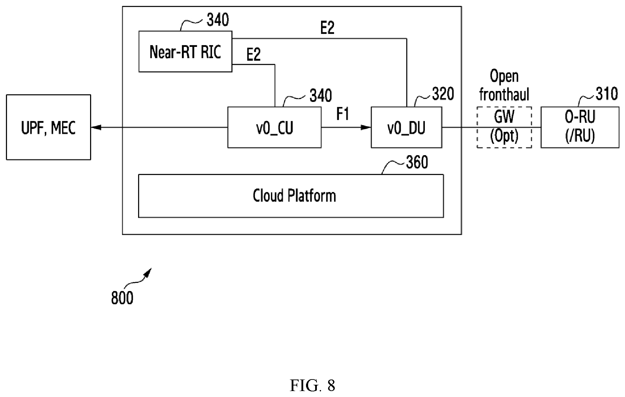

FIG. 8 illustrates an implementation example of an E2 node and a RIC. In a scenario of an implementation example 800, the E2 node (e.g., the O-eNB 305, the O-DU 320, the O-CU 330, the O-CU-CP 331, the O-CU-UP 332, or the E2 node 610) and the RIC (e.g., the Near-RT RIC 340 or the RIC 640) may be configured in a device (e.g., a server) by being virtualized in a cloud platform (e.g., an open chassis and blade specification edge cloud). This scenario may provide latency sufficiently low to satisfy an O-DU latency requirement. This scenario may support deployment in a dense urban region with abundant fronthaul capacity allowing a base band unit (BBU) function to be pooled at a central location. Accordingly, it may not be necessary to attempt to centralize a RIC close to real time (RT) beyond a limit at which an O-DU function may be centralized.

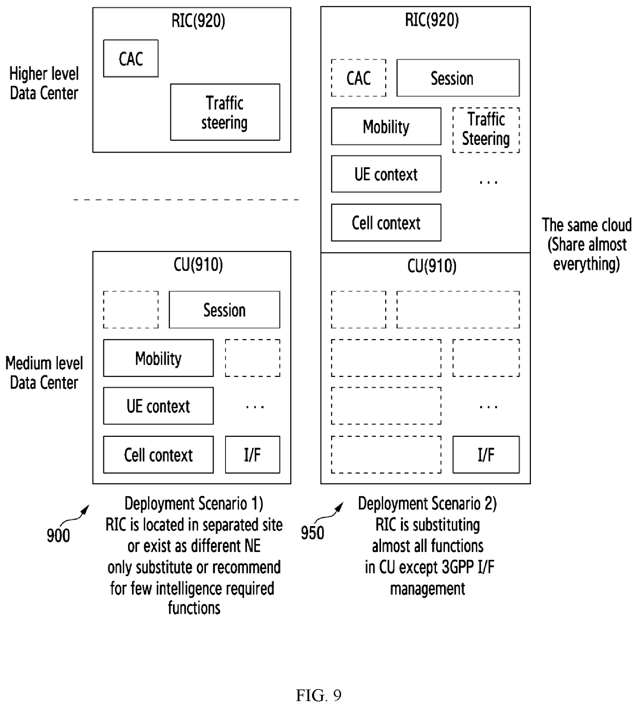

FIG. 9 illustrates examples of a functional split between a central unit (CU) and a RIC.

Referring to FIG. 9, functions for a central unit (CU) 910 (e.g., the O-CU 330, the O-CU-CP 331, or the O-CU-UP 332) and a RIC 920 (e.g., the Near-RT RIC 340) may be split or implemented jointly. According to deployment of the functions, a deployment scenario may be determined. For example, the functions may be distributed according to a deployment scenario #1 900. It may be configured to replace only at least one intelligence-required function (e.g., a traffic steering function or a cell admission control (CAC) function). In the deployment scenario #1 900, the RIC 920 may be located at a separate site or may exist only as another NE. For another example, the functions may be distributed according to a deployment scenario #2 950. In the deployment scenario #2 950, the RIC 920 may replace almost all functions of the CU 910 (e.g., a mobility function, a session function, a UE context function, and a cell context function), except for 3GPP I/F management. In the deployment scenario #2 950, the RIC 920 may be implemented as the same device (e.g., a server device) as the CU 910. For example, in the same cloud, the RIC 920 may share all the functions with the CU 910.

FIG. 9 illustrates two scenarios, but other scenarios may be applied. For example, in the deployment scenario #1 900, a mobility function may be performed by the RIC 920 rather than by the CU 910. In addition, for example, in the deployment scenario #1 900, a UE context function may be performed by the RIC 920 rather than by the CU 910. In addition, for example, in the deployment scenario #1 900, a session function may be performed by the RIC 920 rather than by the CU 910.

Hereinafter, procedures on an E2 interface defined in O-RAN are first described. In the present document, a table is used to describe IEs in a message, and 'M' in the table represents that inclusion of a corresponding IE in the message is mandatory. 'O' represents that inclusion of the corresponding IE in the message is optional. 'Message Type' represents a message type (e.g., an initiation message, a successful outcome, or an unsuccessful outcome), and 'Transaction ID' may be used to uniquely identify a corresponding procedure (e.g., a RIC control procedure) among parallel ongoing procedures of the same type.

In the present disclosure, procedures between an E2 node 610 and a Near-RT RIC 640 are described. Hereinafter, an E2 node for performing an E2AP procedure is referred to as the E2 node 610, and a Near-RT RIC for performing the E2AP procedure is referred to as the Near-RT RIC 640. For the E2 node 610, a description of an O-eNB 305, an O-CU-CP 331, an O-CU-UP 332, an O-DU 320, or a base station (e.g., a base station 101 or a base station 203) described through FIGS. 1 to 9 may be referred to. For the Near-RT RIC 640, a description of a Near-RT RIC 340 and a RIC 640 described through FIGS. 1 to 9 may be referred to.

1. E2 SETUP PROCEDURE

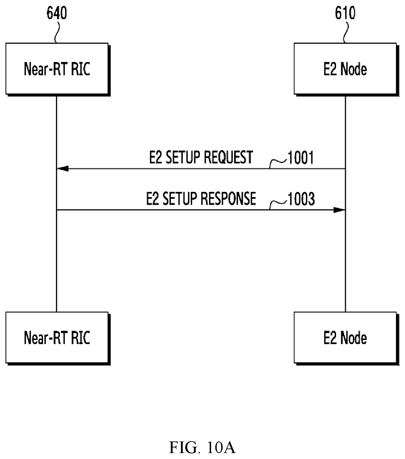

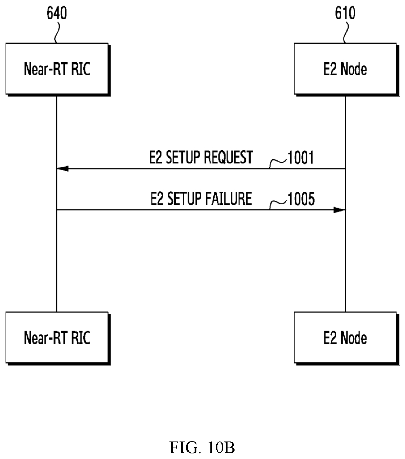

FIGS. 10A and 10B illustrate examples of an E2 setup procedure. A purpose of the E2 setup procedure is for an E2 node (e.g., an E2 node 610) and a Near-RT RIC (e.g., a Near-RT RIC 640) to exchange application level data necessary to correctly interoperate on an E2 interface. The procedure is a first E2AP procedure triggered after a transport network layer (TNL) association becomes operational. In the procedure, all existing application level configuration data of each of two nodes may be cleared and replaced with received data. The E2 setup procedure may use E2 support function signaling. The E2 setup procedure may be initiated by the E2 node 610. In FIG. 10A, an example of signaling in a case that the E2 setup procedure is successful is described, and in FIG. 10B, an example of signaling in a case that the E2 setup procedure fails is described.

Referring to FIG. 10A, in operation 1001, the E2 node 610 may transmit an E2 setup request message to the Near-RT RIC 640. The E2 node 610 may initiate the E2 setup procedure by transmitting the E2 setup request message including data. The E2 setup request message may be used to deliver initialization information from the E2 node 610 to the Near-RT RIC 640. For example, the E2 setup request message may include a RAN function addition list information element (IE). For example, the E2 setup request message may include an E2 node component configuration addition list IE. As an example, the E2 setup request message may have the following format.

**[Table 1]**

| IE/Group Name | Presence | Range | IE type and referen ce | Semantics descriptio n | Critical ity | Assign ed Critical ity |
|---|---|---|---|---|---|---|
| Message Type | M | | 9.2.3 | | YES | reject |
| Transaction ID | M | | 9.2.33 | . | YES | reject |
| Global E2 Node ID | M | | 9.2.6 | | YES | reject |
| RAN Functions Added List | | 1 | | List of RAN functions in E2 node | YES | reject |
| >RAN Function item | | 1.. <maxofRANfunction ID> | | | | |
| >>RAN Function ID | M | | 9.2.8 | Id of the declared Function | - | |
| >>RAN Function Definition | M | | 9.2.23 | Definition of Function | - | |
| >>RAN Function Revision | M | | 9.2.24 | Revision counter | - | |
| >>RAN Function OID | M | | 9.2.31 | Object identifier of correspon ding E2SM | - | |
| E2 Node Component Configuration Addition List | | 1 | | List of E2 Node componen t configurat ion informati on | YES | reject |
| >E2 Node Component Configuration Addition Item | | 1.. <maxofE2nodeCom ponents> | | | EACH | reject |
| >>E2 Node Component Interface Type | M | | 9.2.26 | E2 Node componen t interface type | - | |
| >>E2 Node Component ID | O | | 9.2.32 | E2 Node Compone nt Identifier | - | |
| >>E2 Node Component Configuration | M | | 9.2.27 | Contents depends on componen t interface type | - | |

**[Table 2]**

| Range bound | Explanation |
|---|---|
| maxofRANfunctionID | Maximum no. of RAN Functions supported by E2 Node. Value is 256. |
| maxofE2nodeCompone nts | Maximum no. of E2 Node components supported by E2 Node. Value is 1024 |

For each IE in [Table 1], descriptions of an O-RAN WG3.E2AP specification may be referred to. A maximum value in [Table 2] is exemplary and is not construed as limiting embodiments of the present disclosure. In addition, for each RAN Function ID, an E2 service model indicated through a RAN Function OID may be specified. RAN Function Definition information may be used to provide information necessary for the Near-RT RIC to support a corresponding RAN Function in the E2 node. The RAN Function OID may be used to identify a RAN Function Definition in the RAN Function Definition information. The RAN Function Revision represents a revision counter (or updated version information or the number of updates) for the corresponding RAN Function. The RAN Function OID is as follows. The RAN Function OID may uniquely represent a specific E2 service model (SM). The RAN Function OID may be used to represent a RAN Function Definition for a specific E2SM.

**[Table 3]**

| E2SM short name | OID | Syntax language |
|---|---|---|
| E2SM-NI | iso(1) identified-organization(3) dod(6) internet(1) private(4) enterprise(1) oran(53148) e2(1) version1 (1) e2sm(2) e2sm-NI-IEs (1) | ASN.1 |
| E2SM-KPM version1 | iso(1) identified-organization(3) dod(6) internet(1) private(4) enterprise(1) oran(53148) e2(1) version1 (1) e2sm(2) e2sm-KPM-IEs (2) | ASN.1 |
| E2SM-KPM version2 | iso(1) identified-organization(3) dod(6) internet(1) private(4) enterprise(1) oran(53148) e2(1) version2 (2) e2sm(2) e2sm-KPM-IEs (2) | ASN.1 |
| E2SM-RC | iso(1) identified-organization(3) dod(6) internet(1) private(4) enterprise(1) oran(53148) e2(1) version1 (1) e2sm(2) e2sm-RC-IEs (3) | ASN.1 |
| E2SM-CCC | iso(1) identified-organization(3) dod(6) internet(1) private(4) enterprise(1) oran(53148) e2(1) version1 (1) e2sm(2) e2sm-CCC-IEs (4) | JSON |

Referring to [Table 3], it may be identified that E2SM-RC and E2SM-CCC have a difference in a coding scheme. In a case that a service model is different, an OID value corresponding to a corresponding RAN Function ID may be different.

In operation 1003, the E2 node 610 may receive an E2 setup response message from the Near-RT RIC 640. For example, in a case that the Near-RT RIC 640 successfully processes a RAN function addition list IE, the Near-RT RIC 640 may include a RAN function acceptance list IE and/or a RAN function rejection list IE in the E2 setup response message. For example, in a case that the Near-RT RIC 640 successfully processes an E2 node component configuration addition list IE, the Near-RT RIC 640 may include an E2 node component configuration addition acknowledgment list IE in the E2 setup response message. As an example, the E2 setup response message may have the following format.

**[Table 4]**

| IE/Group Name | Presen ce | Range | IE type and referen ce | Semantic s descripti on | Critical ity | Assign ed Critical ity |
|---|---|---|---|---|---|---|
| Message Type | M | | 9.2.3 | | YES | reject |
| Transactio n ID | M | | 9.2.33 | . | YES | reject |
| Global RIC ID | M | | 9.2.4 | | YES | reject |
| RAN Functions Accepted List | | 0..1 | | Complet e list of Function s accepted by Near-RT RIC | | |
| >RAN Functions ID item | | 1 .. <maxofRANfunction ID> | | | YES | Reject |
| >>RAN Function ID | M | | 9.2.8 | Id of the declared Function | - | |
| >>RAN Function Revision | M | | 9.2.24 | Revision counter | - | |
| RAN Functions Rejected List | | 0..1 | | Complet e list of Function s not accepted by Near-RT RIC | | |
| RAN Functions ID Cause Item | | 1 .. <maxofRANfunction ID> | | | YES | reject |
| >>RAN Function ID | M | | 9.2.8 | Id of the declared Function | - | |
| >>Cause | M | | 9.2.1 | Reason for not acceptin g function | - | |
| E2 Node Componen t Configurat ion Addition Acknowle dge List | | 1 | | Complet e list of E2 Node Compon ents in the E2 SETUP REQUE ST message | YES | reject |
| >E2 Node Componen t Configurat ion Addition Acknowle dge Item | | 1.. <maxofE2nodeComp onents> | | | EACH | reject |
| >>E2 Node Componen t Interface Type | M | | 9.2.26 | E2 Node compone nt interface type | - | |
| >>E2 Node Componen t ID | M | | 9.2.32 | E2 Node Compon ent Identifier | - | |
| >>E2 Node Componen t Configurat ion Acknowle dge | M | | 9.2.28 | Success or failure with Cause | - | |

**[Table 5]**

| Range bound | Explanation |
|---|---|
| maxofRANfunctionID | Maximum no. of RAN Functions supported by E2 Node. Value is 256. |
| maxofE2nodeCompone nts | Maximum no. of E2 Node components supported by E2 Node. Value is 1024 |

For each IE in [Table 4], descriptions of the O-RAN WG3.E2AP specification may be referred to. A maximum value in [Table 5] is exemplary and is not construed as limiting embodiments of the present disclosure.

Referring to FIG. 10B, in operation 1001, the E2 node 610 may transmit an E2 setup request message to the Near-RT RIC 640. For the E2 setup request message, descriptions of the E2 setup request message in operation 1001 of FIG. 10A may be referred to.

In operation 1005, the E2 node 610 may receive an E2 setup failure message from the Near-RT RIC 640. The E2 setup failure message may be transmitted for the Near-RT RIC 640 to indicate an E2 setup failure to the E2 node 610. For example, in a case that the Near-RT RIC 640 is unable to accept setup, the Near-RT RIC 640 may respond with an E2 setup failure message including an appropriate cause value. The Near-RT RIC 640 may provide, in the E2 setup failure message, an alternative transport layer information IE to be used by the E2 node when restarting the E2 setup procedure toward the Near-RT RIC 640. In a case that a 'Time To Wait' IE is included in the E2 setup failure message, the E2 node 610 may be required to wait for at least the indicated time before restarting the E2 setup procedure toward the Near-RT RIC 640. For example, the E2 setup failure message may have the following format.

**[Table 6]**

| IE/Group Name | Presenc e | Range | IE type and referenc e | Semantic s descriptio n | Criticali ty | Assigne d Criticali ty |
|---|---|---|---|---|---|---|
| Message Type | M | | 9.2.3 | | YES | reject |
| Transaction ID | M | | 9.2.33 | . | YES | reject |
| Cause | M | | 9.2.1 | | YES | ignore |
| Time To Wait | O | | 9.2.5 | | YES | ignore |
| Criticality Diagnostics | O | | 9.2.2 | | YES | Ignore |
| Transport Layer Information | O | | 9.2.29 | | YES | ignore |

For each IE in [Table 6], descriptions of the O-RAN WG3.E2AP specification may be referred to.

Signaling between the E2 node 610 and the Near-RT RIC 640 for the E2 setup procedure has been described through FIGS. 10A and 10B. As a non-limiting example, in a case that a first message received for a specific TNL connection is not an E2 setup request message, an E2 setup response message, an E2 setup failure message, or an E2 node configuration update message, a corresponding message may be processed as a logical error.

### 2. RIC SUBSCRIPTION PROCEDURE

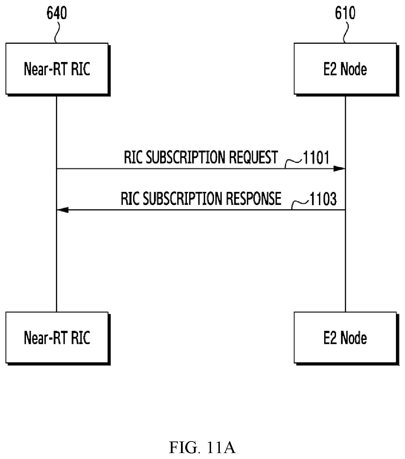

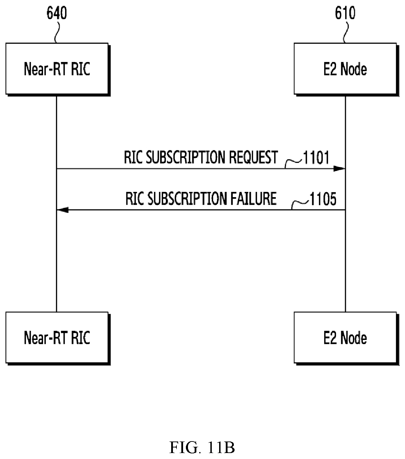

FIGS. 11A and 11B illustrate examples of a RIC subscription procedure. The RIC subscription procedure may be used to establish a RIC subscription in an E2 node configured with an event trigger and a series of RIC service actions. The RIC subscription procedure may be initiated by a Near-RT RIC 640. In the RIC subscription procedure, RIC service signaling may be used.

Referring to FIG. 11A, in operation 1101, the Near-RT RIC 640 may transmit a RIC subscription request message to an E2 node 610. The RIC subscription request message may be used to create a new RIC subscription in the E2 node. The Near-RT RIC 640 may initiate the RIC subscription procedure by transmitting, to the E2 node 610, the RIC subscription request message including a unique RIC request ID IE allocated by the Near-RT RIC 640. When the Near-RT RIC 640 transmits the RIC subscription request message, a timer (TRICEVENTcreate) may be started. Upon reception of the RIC subscription request message, the E2 node 610 may perform the following operation(s).
- determine a target RAN function using information of a RAN Function ID IE, and configure the requested event trigger using information of a RIC Subscription Details IE
- in a case that one or more REPORT, INSERTION, and/or POLICY RIC service actions are included in the RIC Subscription Details IE, the target RAN function validates the event trigger and the requested action sequence and, in a case that they are accepted, stores the required RIC Request ID, the RIC Event Trigger Definition IE, and a sequence of RIC service actions
- in a case that an optional RIC Subscription Start Time IE is present and has expired, the E2 node 610 may ignore the optional RIC Subscription Start Time IE

**[Table 7]**

| IE/Group Name | Presenc e | Range | IE type and referenc e | Semantic s descriptio n | Criticali ty | Assigne d Criticali ty |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |
| RIC Subscripti on Details | M | | | | YES | reject |
| >RIC Event Trigger Definition | M | | 9.2.9 | | - | |
| >Sequence of Actions | | 1.. <maxofRICactio nID> | | | EACH | ignore |
| >>RIC Action ID | M | | 9.2.10 | | - | |
| >>RIC Action Type | M | | 9.2.11 | | - | |
| >>RIC Action Definition | O | | 9.2.12 | | - | |
| >>RIC Subsequen t Action | O | | 9.2.13 | | - | |
| >>RIC Action Execution Order | O | | 9.2.35 | Used to define a specific execution order | - | |
| RIC Subscripti on Start Time | O | | 9.2.34 | | YES | reject |
| RIC Subscripti on End Time | O | | 9.2.34 | | YES | reject |

**[Table 8]**

| Range bound | Explanation |
|---|---|
| maxofRICActionID | Maximum no. of Actions to be requested by Near-RT RIC. Value is 16. |

For each IE in [Table 7], descriptions of the O-RAN WG3.E2AP specification may be referred to. A maximum value in [Table 8] is exemplary and is not construed as limiting embodiments of the present disclosure.

In operation 1103, the Near-RT RIC 640 may receive a RIC subscription response message from the E2 node 610. The RIC subscription response message may be used to accept a request from the Near-RT RIC 640 to create a new RIC subscription in the E2 node. When the requested trigger and at least one required RIC service action are accepted by the E2 node 610, the E2 node 610 may reserve necessary resources for each admitted RIC service action and transmit the RIC subscription response message to the Near-RT RIC 640. For example, the E2 node 610 may include, in a RIC Actions Admitted List IE of the RIC subscription response message, a RIC service action for which resources are prepared in the E2 node 610. For example, the E2 node 610 may include a RIC service action that is not admitted in a RIC Actions Not Admitted List IE, together with an appropriate cause value. When receiving the RIC subscription response message, the Near-RT RIC 640 may cease a timer (T_{RICEVENTcreate}) and terminate the RIC subscription procedure.

In a case that the E2 node 610 accepts two or more RIC service actions, the RIC service action sequence may be executed according to the following considerations whenever a common event trigger occurs.
- in a case that an optional RIC Action Execution Order IE is not present or is present and set to 0 ("any order"), a specific RIC service action of the RIC service action sequence may be executed in any order regardless of an execution order of another RIC service action.
- in a case that the optional RIC Action Execution Order IE is present and set to a value greater than 0, a specific RIC Service Action may be sequentially executed according to the RIC Action Execution Order IE.
- in a case that two or more RIC service actions have the same value for the optional RIC Action Execution Order IE, these RIC service actions may be executed in parallel.

In a case that the optional RIC Subscription Start Time IE is present, the E2 node 610 may activate the event trigger only at an indicated start time. In a case that an optional RIC Subscription End Time IE is present, the E2 node 610 may deactivate the event trigger when an indicated end time expires.

Interaction with a RIC Subscription Delete Required procedure: in a case that the optional RIC Subscription End Time IE is present and an displayed end time has expired, the E2 node 610 may transmit a RIC Subscription Delete Required message to the Near-RT RIC 640 together with an appropriate cause value.

Interaction with a RIC Subscription Delete procedure: in a case that the optional RIC Subscription End Time IE is present, the Near-RT RIC 640 may initiate the RIC Subscription Delete procedure when an expected RIC subscription end time expires.

For example, the RIC subscription response message may have the following format.

**[Table 9]**

| IE/Group Name | Presenc e | Range | IE type and referenc e | Semantic s descriptio n | Criticali ty | Assigne d Criticali ty |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |
| RIC Actions Admitted List | | 1.. <maxofRICactio nID> | | | YES | reject |
| >RIC Action ID | M | | 9.2.10 | | - | |
| RIC Actions Not Admitted List | | 0.. <maxofRICactio nID> | | | YES | reject |
| >RIC Action ID | M | | 9.2.10 | | - | |
| >Cause | M | | 9.2.1 | | - | |

**[Table 10]**

| Range bound | Explanation |
|---|---|
| maxofRICActionID | Maximum no. of Actions to be requested by Near-RT RIC. Value is 16. |

For each IE in [Table 9], descriptions of the O-RAN WG3.E2AP specification may be referred to. A maximum value in [Table 10] is exemplary and is not construed as limiting embodiments of the present disclosure.

Referring to FIG. 11B, in operation 1101, the Near-RT RIC 640 may transmit a RIC subscription request message to the E2 node 610. For the RIC subscription request message, descriptions of the RIC subscription request message in operation 1101 of FIG. 11A may be referred to.

In operation 1105, the Near-RT RIC 640 may receive a RIC subscription failure message from the E2 node 610. The RIC subscription failure message may be used to notify the Near-RT RIC 640 that a request for creation of a new RIC subscription has failed. When an error occurs during the RIC subscription procedure, the E2 node 610 may transmit, to the Near-RT RIC 640, the RIC subscription failure message including an appropriate cause value. In a case that the E2 node 610 does not admit a requested RIC service action or detects an inconsistency in a sequence of RIC service actions or a definition of an optional RIC Subsequent Action IE, the E2 node 640 may transmit, to the Near-RT RIC 640, the RIC subscription failure message including an appropriate cause value. In a case that an invalid optional RIC Subscription Start Time IE and/or RIC Subscription End Time IE is included in the RIC subscription procedure, the E2 node 610 may transmit, to the Near-RT RIC 640, the RIC subscription failure message including an appropriate cause value. When receiving the RIC subscription failure message, the Near-RT RIC 640 may cease a timer (T_{RICEVENTcreate}) and terminate the RIC subscription procedure.

Interaction with the RIC Subscription Delete procedure: in a case that there is no response from the E2 node 610 to the RIC subscription request message before the timer (T_{RICEVENTcreate}) expires at the Near-RT RIC 640, the Near-RT RIC 640 may initiate the RIC Subscription Delete procedure including a RIC Request ID IE previously allocated by the Near-RT RIC 640 to cancel the RIC subscription for the E2 node 610. The Near-RT RIC 640 may ignore a RIC subscription response or RIC subscription failure message, which is received after the RIC Subscription Delete procedure is initiated and includes the RIC Request ID IE previously allocated by the Near-RT RIC 640, and release all resources related to the relevant E2.

In a case that the E2 node 610 receives a RIC subscription request message including the RIC Subscription Details IE that does not conform to an E2 service model (E2SM), the E2 node 610 may transmit, to the Near-RT RIC 640, the RIC subscription failure message including an appropriate cause value. When the E2 node 610 receives a RIC subscription request message including an unknown RAN Function ID IE, the E2 node 610 may transmit, to the Near-RT RIC 640, a RIC subscription failure message including an appropriate cause value. When the E2 node 610 receives a RIC subscription request message including the same content, the E2 node 610 may transmit, to the Near-RT RIC 640, a RIC subscription failure message including an appropriate cause value.

For example, the RIC subscription failure message may have the following format.

**[Table 11]**

| IE/Group Name | Presenc e | Range | IE type and referenc e | Semantic s descriptio n | Criticali ty | Assigne d Criticali ty |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |
| Cause | M | | 9.2.1 | | YES | reject |
| Criticality Diagnostics | O | | 9.2.2 | | YES | ignore |

For each IE in [Table 11], descriptions of the O-RAN WG3.E2AP specification may be referred to.

### 3. RIC INDICATION PROCEDURE

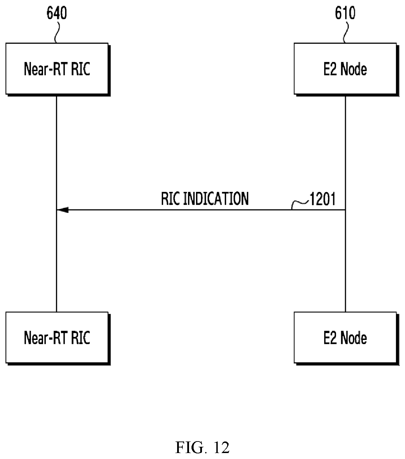

FIG. 12 illustrates an example of a RIC indication procedure. A purpose of the RIC indication procedure is to deliver a RIC service action (e.g., reporting and/or insertion) associated with a RIC subscription procedure. The RIC indication procedure may be initiated by an E2 node. The RIC indication procedure may use RIC service signaling.

Referring to FIG. 12, in operation 1201, an E2 node 610 may transmit a RIC indication message to a Near-RT RIC 640. The E2 node 610 may initiate the RIC indication procedure by transmitting, to the Near-RT RIC 640, the RIC indication message including a RIC Request ID IE previously allocated by the Near-RT RIC 640 during a successful RIC subscription procedure. In a case that the RIC indication message is a response to a RIC service insertion action, the E2 node 610 may provide a RIC Call Process ID IE in the RIC indication message. The E2 node 610 may store a current call state and start a timer (e.g., "RIC Time to Wait"). Thereafter, the E2 node 610 may cease additional processing of an associated RAN function. The Near-RT RIC 640 may use the RIC Call Process ID IE in a subsequent RIC control procedure. In a case that a RIC Subsequent Action IE is associated with the RIC service action, after the RIC indication message is successfully transmitted, the E2 node 610 may proceed according to the following.
- in a case that the RIC Subsequent Action Type IE is set to "continue" or "halt," an associated timer ("RIC Time To Wait") has not expired, and a RIC control request message is received with the same RIC Call Process ID IE, the E2 node 610 may use RIC control request information together with the stored call state and continue to execute remaining actions according to a RIC action sequence defined in the RIC subscription procedure before resuming a normal function of the associated RAN function.
- in a case that the RIC Subsequent Action Type IE is set to "continue" and the timer ("RIC Time To Wait") has expired, the E2 node 610 may use the stored call state and continue to execute the remaining RIC service actions according to a defined RIC service action order.
- in a case that the RIC Subsequent Action Type IE is set to "halt" and the timer ("RIC Time To Wait") has expired, the E2 node 610 may halt additional processing of the associated RAN function. In this case, the remaining RIC service actions in the RIC action order defined in the RIC subscription procedure may also be halted. The operations described above may be summarized in the following table.

**[Table 12]**

| Subsequent Action | RIC Time to Wait timer | Condition | Outcome |
|---|---|---|---|
| Continue or Halt | required | E2 Node detected the event trigger in the RIC Event Trigger Definitio n IE. | RIC INDICATION message shall provide the RIC Call Process ID IE and E2 Node shall store current call state, start the associated RIC Time to Wait timer, and suspend further processing of the associated RAN function. |
| Continue or Halt | not yet expired | E2 Node received the RIC CONTR OL REQUES T message with the same RIC call process ID IE. | E2 Node shall use the RIC CONTROL information along with the stored call state and continue to execute any remaining actions in the sequence of RIC Actions defined in the RIC Subscription procedure. |
| Continue | expired | | E2 Node shall use the stored call state and continue to execute any remaining actions in the sequence of RIC Actions defined in the RIC Subscription procedure. |
| Halt | expired | | E2 Node shall abort normal functionality of the associated RAN function. |

For example, the RIC indication message described above may have the following format.

**[Table 13]**

| IE/Group Name | Presenc e | Range | IE type and referenc e | Semantic s descriptio n | Criticali ty | Assigne d Criticali ty |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |
| RIC Action ID | M | | 9.2.10 | | YES | reject |
| RIC Indication SN | O | | 9.2.14 | | YES | reject |
| RIC Indication Type | M | | 9.2.15 | | YES | reject |
| RIC Indication Header | M | | 9.2.17 | | YES | reject |
| RIC Indication Message | M | | 9.2.16 | | YES | reject |
| RIC Call process ID | O | | 9.2.18 | | YES | reject |

For each IE in [Table 13], descriptions of the O-RAN WG3.E2AP specification may be referred to. For the RIC indication Header and the RIC indication message in the RIC indication message of [Table 13], an E2 service model associated with a RAN function may be referred to.

### 4. RIC CONTROL PROCEDURE

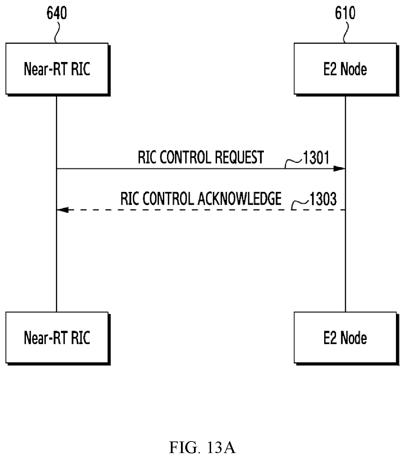

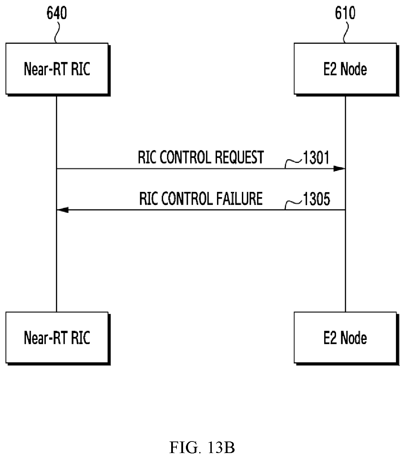

FIGS. 13A and 13B illustrate examples of a RIC control procedure. A purpose of the RIC control procedure is to initiate or resume specific functionality in an E2 node. The RIC control procedure may be initiated by a Near-RT RIC. The RIC control procedure may use RIC service signaling.

Referring to FIG. 13A, in operation 1301, a Near-RT RIC 640 may transmit a RIC control request message to an E2 node 610. The RIC control request message may be used to initiate or resume control function logic. The Near-RT RIC 640 may initiate the RIC control procedure by transmitting the RIC control request message including a unique RIC Request ID IE allocated by the Near-RT RIC 640. When the Near-RT RIC 640 transmits the RIC control request message and an optional RIC Control Ack Request IE is set to "Ack" or is not present, the Near-RT RIC 640 may start a timer (T_{RICcontrol}). For example, the RIC control request message may have the following format.

**[Table 14]**

| IE/Group Name | Presenc e | Range | IE type and referenc e | Semantic s descriptio n | Criticali ty | Assigne d Criticali ty |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |
| RIC Call Process ID | O | | 9.2.18 | | YES | reject |
| RIC Control Header | M | | 9.2.20 | | YES | reject |
| RIC Control Message | M | | 9.2.19 | | YES | reject |
| RIC Control Ack Request | O | | 9.2.21 | | YES | reject |

For each IE in [Table 14], descriptions of the O-RAN WG3.E2AP specification may be referred to. In [Table 14], for the "RIC Control Header" IE and the "RIC Control message" IE, the E2 service model associated with the RAN function may be referred to. According to an embodiment, in a case of a RIC control request message for access barring, the RIC control request message may include a "RIC Control Header" IE corresponding to "E2SM-RC Control Header Format 1" of [Table 30] described below.

In operation 1303, the Near-RT RIC 640 may receive a RIC control acknowledgment message from the E2 node 610. After receiving the RIC control request message, the E2 node 610 may perform the following.
- determine a target RAN function using information of a RAN Function ID IE, and initiate a requested RIC control procedure action using information of the RIC Control Message IE.
- in a case that a RIC Call Process ID IE is included in the RIC Control REQUEST message, the E2 node 610 may use the IE to identify a specific call process indicated in the RIC indication message.
- in a case that the RIC control request message includes an optional RIC Control Ack Request IE set to "Ack" or the optional RIC Control Ack Request IE is not present, and the E2 node 610 successfully processes the requested RIC Control procedure action, the E2 node 610 may respond with the RIC control acknowledgment message.
- in a case that the RIC control request message includes an optional RIC Control Ack Request IE set to "NoAck" and the E2 node 610 successfully processes the requested RIC control procedure action, the E2 node 610 may not transmit the RIC control acknowledgment message. In such a case, operation 1303 may be omitted.

When receiving the RIC control acknowledgment message, the Near-RT RIC 640 may cease the timer (T_{RICcontrol}) and terminate the RIC control procedure. The Near-RT RIC 640 may use information included in an optional RIC Control Outcome IE to determine subsequent actions. For example, the RIC control acknowledgment message may have the following format.

**[Table 15]**

| IE/Group Name | Presenc e | Range | IE type and referenc e | Semantic s descriptio n | Criticali ty | Assigne d Criticali ty |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |
| RIC Call process ID | O | | 9.2.18 | | YES | reject |
| RIC Control Outcome | O | | 9.2.25 | | YES | reject |

For each IE in [Table 15], descriptions of the O-RAN WG3.E2AP specification may be referred to.

Referring to FIG. 13B, in operation 1301, the Near-RT RIC 640 may transmit a RIC control request message to the E2 node 610. For the RIC control request message, descriptions of the RIC control request message in operation 1301 of FIG. 13A may be referred to.

In operation 1305, the Near-RT RIC 640 640 may receive a RIC control failure message from the E2 node 610. For example, in a case that the RIC control request message includes an invalid RIC Call Process ID IE, the E2 node 610 may respond with the RIC control failure message including an appropriate cause value. For example, in a case that the RIC control request message includes an optional RIC Call Process ID IE for which a timer ("RIC Time To Wait") has expired, the E2 node 610 may respond with the RIC control failure message including an appropriate cause value. For example, in a case that the E2 node 610 is unable to execute a requested RIC control procedure E2SM-specific action, the E2 node 610 may respond with the RIC control failure message including an appropriate cause value. For example, when the E2 node 610 detects an encoding or functional error in an E2SM-specific IE included in the RIC control request message, the E2 node 610 may respond with the RIC control failure message including an appropriate cause value. For example, when the E2 node 610 receives the RIC control request message including an unknown RAN Function ID IE, the E2 node 610 may respond with the RIC control failure message including an appropriate cause value. For example, in a case that the E2 node 610 does not support a specific RIC control procedure action, the E2 node 610 may respond with the RIC control failure message including an appropriate cause value. When receiving the RIC control failure message, the Near-RT RIC 640 may cease a timer T(_{RICcontrol}), if running, and terminate the RIC control procedure. The Near-RT RIC 640 may use information included in a Cause IE and an optional RIC Control Outcome IE to determine subsequent actions. For example, the RIC control failure message may have the following format.

**[Table 16]**

| IE/Group Name | Presenc e | Range | IE type and referenc e | Semantic s descriptio n | Criticali ty | Assigne d Criticali ty |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |
| RIC Call process ID | O | | 9.2.18 | | YES | reject |
| Cause | M | | 9.2.1 | | YES | ignore |
| RIC Control Outcome | O | | 9.2.25 | | YES | Reject |
| Criticality Diagnostics | O | | 9.2.2 | | YES | ignore |

For each IE in [Table 16], descriptions of the O-RAN WG3.E2AP specification may be referred to.

When receiving an ERROR INDICATION message including a RIC Request ID IE associated with the RIC control request message, in a case that the timer (T_{RICcontrol}) is running, the Near-RT RIC 640 may cease the timer and terminate the RIC control procedure. In a case that the timer (T_{RICcontrol}) is set when transmitting the RIC control request message and there is no response from the E2 node 610 before the timer expires, the Near-RT RIC 640 may transmit an error indication message together with an appropriate value for a Cause IE.

The E2 node 610 may operate according to an enrolled (subscribed) service through the RIC subscription procedure. For example, in a case that a RIC subscription subscribed by a request of the Near-RT RIC 640 is transmission of a RIC indication message, the E2 node 610 may transmit the RIC indication message from the Near-RT RIC 640. At this time, a RAN Function ID may be delivered through the E2 setup procedure and/or the RIC subscription procedure, and the E2 node 610 may know an E2 service model in the currently subscribed service through an OID associated with the RAN Function ID. As an example, information included in a "RIC Indication Header" and a "RIC Indication message" in the RIC indication message may be specific to the E2 service model. For example, in a case that a RIC subscription subscribed by a request of the Near-RT RIC 640 is the RIC control procedure, the Near-RT RIC 640 may transmit a RIC control request message to the E2 node 610. At this time, the RAN Function ID may be delivered through the E2 setup procedure and/or the RIC subscription procedure, and the E2 node 610 may know the E2 service model in the currently subscribed service through the OID associated with the RAN Function ID. According to the E2 service model, a format of the RIC control request message in the RIC control procedure or a format of the RIC indication message in the RIC indication procedure may be different. As an example, information included in the "RIC Control Header" and the "RIC Control message" in the RIC control request message may be specific to the E2 service model.

### I. RAN PARAMETER FOR ACCESS BARRING

Hereinafter, in embodiments of the present disclosure, content related to an access barring function in an E2SM-RC service model is described. E2SM-RC may have a service style list according to whether a service style is report, insert, control, policy, or query, and, as an example, a type of a control service style is described. A RIC control procedure according to embodiments of the present disclosure may be used for access barring in the service model of the E2SM-RC. In a 5G network, cell access barring is a mechanism used by an operator to regulate and manage network traffic by restricting access to a specific cell according to criteria such as a device type, a service type, and a time. The access barring may be useful for managing congestion during periods of highest usage or in an area having high traffic.

An exact implementation of the access barring may differ among operators due to the use of various standards and technologies, but parameters may be determined according to a 3GPP specification. The access barring may be used through unified access control (UAC) or enhanced access barring (EAB). The access barring may provide an operator with a means capable of optimizing network management by selectively allowing access to a specific cell for a specific device and service. In addition, a parameter(s) related to the access barring may be broadcast through a master information block (MIB) and a system information block type 1 (SIB1), and each user equipment (UE) may be assigned an access ID and a category. Through the parameter(s), the operator may finely control cell access. Assume a situation in which an E2 node 610 is subscribed to a service for energy saving with a Near-RT RIC 640. The access barring may be used for the energy saving. Meanwhile, in a case that the E2SM-RC specification does not sufficiently include the parameters for the access barring, it may be difficult for the Near-RT RIC 640 to effectively control the E2 node 610 through a RIC control request message.

The access barring in the E2SM-RC may be referred to as follows. For example, in section 7.6.1 of the E2SM-RC, a radio access control function known as "RIC style type 4" may be designated. The function may be used as a means for modifying a radio access-related function used to regulate user equipment access to a cell. Currently defined control service types may be referred to as follows.

**[Table 17]**

| RIC Style Type | Style Name | Style Description |
|---|---|---|
| 1 | Radio Bearer control | Used to modify the configuration the Radio Bearer Control (RBC) related parameters and/or behaviours at the E2 Node for a specific UE or a UE group.Belongs to Fundamental level CONTROL Services. |
| 2 | Radio resource allocation control | Used to modify the configuration the Radio Resource Allocation control related parameters and/or behaviours at the E2 Node for a specific E2 Node, cell, slice, UE and/or QoSBelongs to Fundamental level CONTROL Services. |
| 3 | Connected mode mobility control | Used to initiate a connected mode mobility procedure (Handover or Conditional Handover), optionally with Dual Active Protocol Stack (DAPS), for a specific UE towards either a target cell (for HO) or a list of candidate cells (for CHO)Belongs to Fundamental level CONTROL Services. |
| 4 | Radio access control | Used to modify Radio access related functions used to control UE access to cellsBelongs to Fundamental level CONTROL Services. |
| 5 | Dual connectivity (DC) control | Used to initiate Dual connectivity (DC) mechanismsBelongs to Fundamental level CONTROL Services. |
| 6 | Carrier Aggregation (CA) control | Used to initiate Carrier Aggregation (CA) mechanismsBelongs to Fundamental level CONTROL Services. |
| 7 | Idle mode mobility control | Used to modify Idle mode mobility related functions used to control UE reselection of cellsBelongs to Fundamental level CONTROL Services. |
| 8 | UE information and assignment | Used for Explicit UE list assignment, UE information report generation and to complete UE identification. These services are used to support other RIC services.Belongs to Fundamental level CONTROL Services. |
| 9 | Measurement Reporting Configuration control | Used to control the measurement report configuration for a given UE or a group of UEs. |
| 10 | Beamforming Configuration control | Used to control beamforming configuration for a specific UE. |
| 255 | Multiple Actions Control | Used for multiple actions of the selected fundamental level CONTROL Service style(s).Belongs to integrated level CONTROL Services. |

In a case that the style type is designated as "4," a corresponding application may include random access channel (RACH) backoff, radio resource control (RRC) connection rejection, RRC connection release, user equipment (UE) admission, and access barring. A control service style in which the style type is designated as "4" may provide a mechanism for initiating or resuming a radio access control-related process using a RIC Control Message IE, an associated RIC Control Header IE, and an optional RIC Call Process ID IE used when resuming a call process after a previous INSERT service. The INSERT service is service style 4 addressed in section 7.5.5 of the E2SM-RC specification. In a case that the style type is designated as "4," a control action for access barring may be determined as follows. According to an embodiment, a control action ID may be set to "3".

**[Table 18]**

| Contro l Action ID | Control Action Name | Control Action Description | Associate d RAN Parameter s |
|---|---|---|---|
| 1 | UE Admission Control | To control UE admission. | 8.4.5.1 |
| 2 | RACH backoff control | To control RACH backoff parameters | 8.4.5.2 |
| 3 | Access barring control | To control access barring configuration parameters | 8.4.5.3 |
| 4 | RRC Connection Release control | To control release of RRC connection of the UE | 8.4.5.4 |
| 5 | RRC Connection Reject control | To reject RRC connection request of the UE | 8.4.5.5 |

The RIC control message ("RIC Control Message" IE) may include one or more RAN parameters related to a service. The RAN parameters may be dependent on a RIC style type and a control action ID. For example, when RAN parameters related to the access barring are included in the RIC control request message, the RIC style type may be set to "4," and the control action ID may be set to "3". As an example, the RIC control message ("RIC Control Message" IE) may use the following format.

**[Table 19]**

| IE/Group Name | Presenc e | Range | IE type and reference | Semantics descriptio n |
|---|---|---|---|---|
| List of RAN parameters | | 0..<maxnoofAssociatedRANPara meters> | | |
| >RAN Parameter ID | M | | 9.3.8 | Refer to table in clause 8.4 for applicable RAN Parameter s |
| >RAN Parameter Definition | O | | 9.3.51 | Refer to clause 7.6.9 for usage of this IE. |

**[Table 20]**

| Range bound | Explanation |
|---|---|
| maxnoofAssociatedRANParameters | Maximum no. of RAN parameters supported by RAN Function for a specific Control action. The value is <65535>. |

For each IE in [Table 19], descriptions of the O-RAN WG3.E2AP specification may be referred to. A maximum value in [Table 20] is exemplary and is not construed as limiting embodiments of the present disclosure.

The E2 node 610 having received the RIC control request message in operation 1301 may call a procedure related to access barring control, such as user equipment (UE) context management (or MIB delivery or SIB1 delivery) or RRC message transmission, and include an IE corresponding to one or more parameters in a related interface message. Hereinafter, RAN parameters related to the access barring control described above are described.

A UAC mechanism is responsible for limiting the number of call requests received from a UE based on an access ID and an access category. The E2 node (e.g., a gNB) may broadcast radio resource control (RRC) information of the UAC through the system information block 1 (SIB1), as shown in the table below.

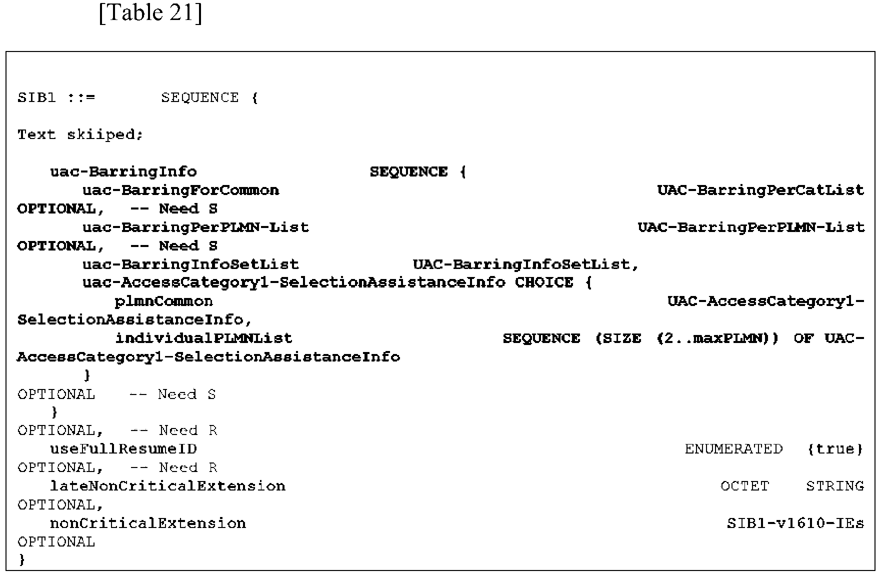

The Near-RT RIC 640 may set related parameters related to the UAC for the E2 node 610 (e.g., gNB) through the RIC control request message according to the E2SM-RC. The UAC has minimal or no impact on UE context management or RRC message transmission.

The access barring control for the E2SM-RC is for designating parameters for access barring control defined in 3GPP. The parameters may transmitted to the E2 node 610 by being included in a message (e.g., the RIC control request message) transmitted by the Near-RT RIC 640. As the RAN parameters for the access barring, in addition to UAC-related parameters, it may be required to designate access parameters designated in the MIB or the SIB1. According to an embodiment, the RAN parameters for the access barring control may include a parameter(s) included in an MIB message. The table below relates to the MIB message. The MIB may be used to deliver "cellBarred" and "intraFreqReselection" IEs as parameters used for cell access barring.

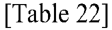

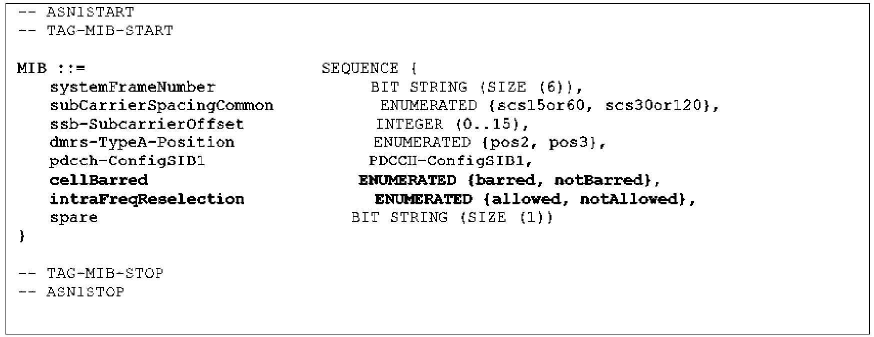

The parameters defined in the MIB of [Table 22] may be referred to as follows.

### 1) "cellBarred" IE (value: "barred" or "notBarred")

The "barred" value means that the cell is barred as defined in 3GPP TS 38.304. For example, it may be difficult for a user equipment (UE) to access a barred cell. In other words, access to a cell in which the IE is set to "barred" may be blocked. In a case that the IE indicates that the cell is barred, the UE may not be allowed to camp on the cell. The field is ignored in an integrated access backhaul (IAB)-mobile terminal (MT) and a network-controlled repeater (NCR)-MT. In a case that a connection is made to an NTN or air-to-ground (ATG), the field is ignored. The field is indicated in the MIB message, and, in a case of multiple public land mobile networks (PLMNs) or non-public networks (NPNs) indicated in the SIB 1, the field is common to all PLMNs and/or NPNs.

### 2) "intraFreqReselection" IE (value: "allowed" or "notAllowed")

The field controls cell selection/reselection for an intra-frequency cell in a case that a highest ranked cell is barred or is processed as being barred by the UE, as specified in 3GPP TS 38.304. For example, assume that the value is set to "allowed". In a case that a cell having the highest priority among one or more cells is barred (in other words, in a case that the UE is barred from accessing (or camping on) a corresponding cell), the UE may perform cell selection/cell reselection to an intra-frequency cell (e.g., a cell having the same carrier frequency as the cell but being a different cell) for the cell. Assume that the value is set to "notAllowed". In a case that a cell having the highest priority among the one or more cells is barred (in other words, in a case that the UE is barred from accessing (or camping on) the corresponding cell), the UE may not be allowed to perform cell selection/cell reselection to the intra-frequency cell (e.g., a cell having the same carrier frequency as the cell but being a different cell) for the cell. For example, the UE may perform cell selection/cell reselection to the inter-frequency cell (e.g., a cell having a carrier frequency different from that of the cell). The field is ignored in an IAB-MT and an NCR-MT.

According to an embodiment, the RAN parameters for the access barring control may include a parameter(s) included in an SIB1 message. The table below relates to a "CellAccessRelatedInfo" IE included in the SIB1 message.

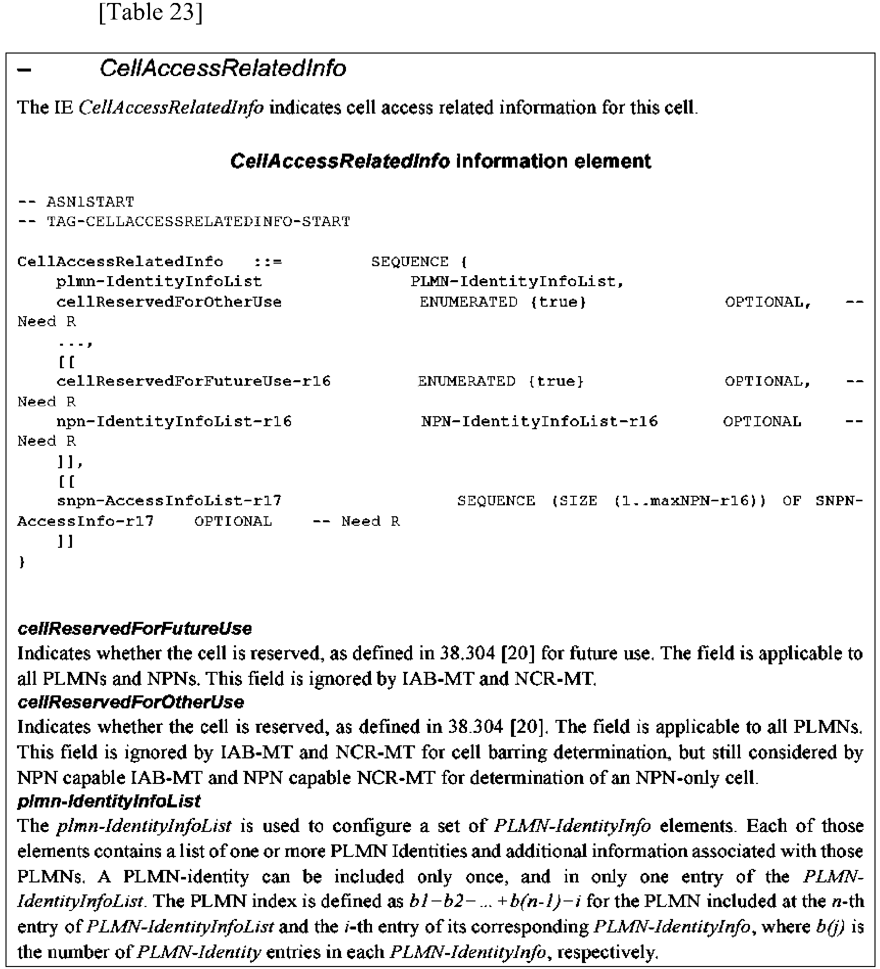

The table below relates to details of the "plmn-IdentityInfoList" IE.

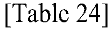

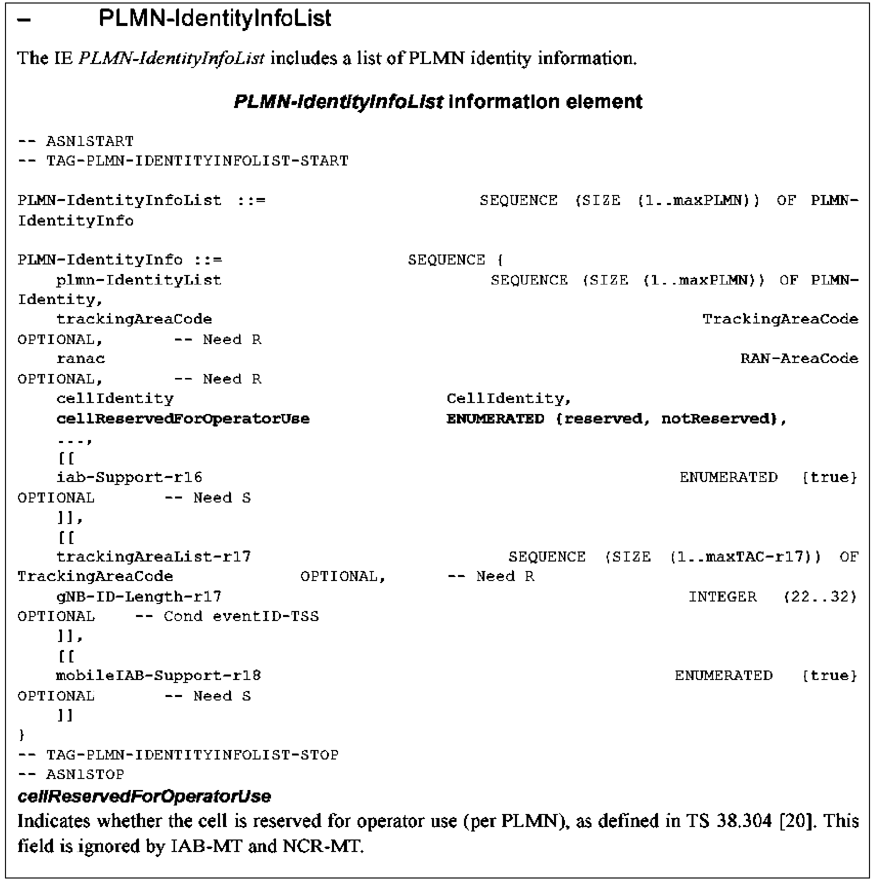

Through [Table 23] and [Table 24], the parameters for the access barring defined in the SIB1 may be referred to as follows.

### 1) cellReservedForOperatorUse (IE type: "reserved" or "notReserved")

The value may indicate whether a corresponding cell is reserved for operator use. A reserved cell represents a cell on which camping is not allowed except for a specific UE specified in system information. For example, in a case that the IE is "reserved," the UE may not be allowed to access the cell except for the UE specified in the system information (in other words, may not be allowed to camp on the cell). In a case of multiple PLMNs or NPNs indicated in the SIB1 message, the field may be designated for each PLMN or standalone non-public network (SNPN).

### 2) cellReservedForOtherUse (IE type: "true")

The value may indicate whether a corresponding cell is reserved. A reserved cell represents a cell on which camping is not allowed except for a specific UE specified in the system information. For example, in a case that the IE is "reserved," the UE may not be allowed to access the cell except for the UE specified in the system information (in other words, may not be allowed to camp on the cell). In a case that there are multiple PLMNs indicated in the SIB1 message, the field is common to all the PLMNs.

### 3) cellReservedForFutureUse (IE type: "true")

The value may indicate whether a corresponding cell is reserved for future use. A reserved cell represents a cell on which camping is not allowed except for a specific UE specified in the system information. For example, in a case that the IE is "reserved," the UE may not be allowed to access the cell except for the UE specified in the system information (in other words, may not be allowed to camp on the cell). In a case of multiple PLMNs or NPNs indicated in the SIB1 message, the field is common to all PLMNs and NPNs.

The RAN parameters currently defined in the E2SM-RC specification for the access barring are as follows. Herein, the RIC style type may be "4," and the control action ID may be "3".

**[Table 25]**

| RAN Parameter ID | RAN Parameter | RAN Parameter Value Type | Key Param | RAN Parameter Definition | Semantics Description |
|---|---|---|---|---|---|
| 1 | Unified Access Control Barring Info | STRUCTURE | | | uac-BarringInfo IE in TS 38.331 [22] Sec 6 |
| 2 | >UAC Barring for Common List | LIST | | | uac-BarringForCo mmon IE in TS 38.331 [22] Sec 6 |
| 3 | >>Barring Per Cat | STRUCTURE | | | UAC-BarringPerCat IE in TS 38.331 [22] Clause 6 |
| 4 | >>>Access Category | ELEMENT | FALSE | accessCategory IE in TS 38.331 [22] Sec 6 | |
| 5 | >>>Barring Info Set Index | ELEMENT | FALSE | UAC-BarringInfoSetI ndex IE in TS 38.331 [22] Clause 6 | |
| 6 | >UAC Barring for PLMN List | LIST | | | uac-BarringPerPL MN-List IE in TS 38.331 [22] Clause 6 |
| 7 | >>UAC-BarringPerPLMN | STRUCTURE | | | UAC-BarringPerPL MN IE in TS 38.331 [22] Sec 6 |
| 8 | >>>PLMN Identity Index | ELEMENT | TRUE | plmn-IdentityIndex IE in TS 38.331 [22] Sec 6 | |
| 9 | >>>CHOICE UAC AC Barring List Type | STRUCTURE | | | Uac-ACBarringList Type IE in TS 38.331 [22] Sec 6 |
| 10 | >>>>UAC Implicit AC Barring List | LIST | | | uac-ImplicitACBar ringList IE in TS 38.331 [22] Clause 6 |
| 11 | >>>>>UAC Implicit AC Barring Item | STRUCTURE | | | |
| 12 | >>>>>>UAC Barring Info Set Index | ELEMENT | FALSE | UAC-BarringInfoSetI ndex IE in TS 38.331 [22] Sec 6 | |
| 13 | >>>>UAC Explicit AC Barring List | LIST | | | uac-ExplicitACBar ringList IE in TS 38.331 [22] Clause 6 |
| 14 | >>>>>Barring Per Cat | STRUCTURE | | | UAC-BarringPerCat IE in TS 38.331 [22] Clause 6 |
| 15 | >>>>>>Access Category | ELEMENT | FALSE | accessCategory IE in TS 38.331 [22] Sec 6 | |
| 16 | >>>>>>Barring Info Set Index | ELEMENT | FALSE | UAC-BarringInfoSetI ndex IE in TS 38.331 [22] Clause 6 | |
| 17 | >UAC Barring Info Set List | LIST | | | UAC-BarringInfoSet List IE in TS 38.331 [22] Sec 6 |
| 18 | >>UAC Barring Info Set Item | STRUCTURE | | | UAC-BarringInfoSet IE in TS 38.331 [22] Clause 6 |
| 19 | >>>UAC Barring Factor | ELEMENT | FALSE | uac-BarringFactor IE in TS 38.331 [22] Sec 6 | |
| 20 | >>>UAC Barring Time | ELEMENT | FALSE | uac-BarringTime IE in TS 38.331 [22] Sec 6 | |
| 21 | >>>UAC Barring For Access Identity | ELEMENT | FALSE | uac-BarringForAcce ssIdentity in TS 38.331 [22] Clause 6 | |
| 22 | >CHOICE Access Category 1 - Selection Assistance Info | STRUCTURE | | | uac-AccessCategor y1-SelectionAssist anceInfo IE in TS 38.331 [22] Sec 6 |
| 23 | >>PLMN Common | ELEMENT | FALSE | UAC-AccessCategory 1-SelectAssistanc eInfo IE in TS 38.331 [22] Clause 6 | |
| 24 | >>Individual PLMN List | LIST | | | individualPLM NList IE in TS 38.331 [22] Clause 6 |
| 25 | >>>PLMN Item | STRUC TURE | | | |
| 26 | >>>>UAC Access Category 1 Selection Assistance Info | ELEMENT | FALSE | UAC-AccessCategory 1-SelectAssistanc eInfo IE in TS 38.331 [22] Clause 6 | |

According to embodiments of the present disclosure, the RAN parameters currently defined in the E2SM-RC specification for the access barring may include the following parameters in addition to the parameters of [Table 25]. According to an embodiment, the RAN parameters for the access barring may include at least one parameter included in a 3GPP MIB message. For the at least one parameter included in the 3GPP MIB message, the table below may be referred to. As an example, an X value may be 36. For each parameter, 3GPP TS 38.331 may be referred to.

**[Table 26]**

| RAN Parameter ID | RAN Parameter | RAN Parameter Value Type | Key Param | RAN Parameter Definition | Semantics Description |
|---|---|---|---|---|---|
| X | cellBarred | ELEMENT | FALSE | cellBarred IE in TS 38.331 [22] Clause 6 (MIB) | Value barred means that the cell is barred, as defined in TS 38.304 [20]. This field is ignored by IAB-MT. This field is ignored for connectivity to NTN. |
| X+1 | intraFreqReselection | ELEMENT | FALSE | intraFreqResele ction IE in TS 38.331 [22] Clause 6 (MIB) | Controls cell selection/reselecti on to intra-frequency cells when the highest ranked cell is barred, or treated as barred by the UE, as specified in TS 38.304 [20]. |
| | | | | | This field is ignored by IAB-MT. |

According to an embodiment, the RAN parameters for the access barring may include at least one parameter included in a 3GPP SIB1 message. For the at least one parameter included in the 3GPP SIB1 message, the table below may be referred to. For each parameter, 3GPP TS 38.331 may be referred to.

**[Table 27]**

| RAN Parameter ID | RAN Parameter | RAN Parameter Value Type | Key Param | RAN Parameter Definition | Semantics Description |
|---|---|---|---|---|---|
| Y | cellAccessRelatedInfo | STRUCTURE | | | CellAccessR elatedInfo IE in TS 38.331 [22] Sec 6 |
| Y+1 | > cellReservedForOperat orUse-per-PLMN-config-List | LIST | | | |
| Y+2 | >> cellReservedForOperat orUse-per-PLMN-config-Item | STRUCTURE | | | |
| Y+3 | >>> PLMN Identity Index | ELEMENT | TRUE | plmn-IdentityIndex IE in TS 38.331 [22] Sec 6 | |
| Y+4 | >>> cellReservedForOperatorUse | ELEMENT | FALSE | cellReservedFor OperatorUse IE in TS 38.331 [22] Sec 6 | Indicates whether the cell is reserved for operator use (per PLMN), as defined in TS 38.304 [20]. This field is ignored by IAB-MT. |
| Y+5 | > cellReservedForOther Use | ELEMENT | FALSE | cellReservedFor OtherUse IE in TS 38.331 [22] Sec 6 | Indicates whether the cell is reserved, as defined in 38.304 [20]. |
| | | | | | The field is applicable to all PLMNs. |
| | | | | | This field is ignored by IAB-MT for cell barring determinatio n, but still considered by NPN capable IAB-MT for determinatio n of an NPN-only cell. |

According to an embodiment, the Near-RT RIC 640 may transmit, to the E2 node 610, a RIC control request message including at least a portion of the parameters for the access barring in [Table 26] or [Table 27]. For example, the RAN parameters for the access barring may be defined as follows.

**[Table 28]**

| RAN Parameter ID | RAN Parameter | RAN Parameter Value Type | Key Param | RAN Parameter Definition | Semantics Description |
|---|---|---|---|---|---|
| 1 | Unified Access Control Barring Info | STRUCTURE | | | uac-BarringInfo IE in TS 38.331 [22] Sec 6 |
| 2 | >UAC Barring for Common List | LIST | | | uac-BarringForCo mmon IE in TS 38.331 [22] Sec 6 |
| 3 | >>Barring Per Cat | STRUCTURE | | | UAC-BarringPerCat IE in TS 38.331 [22] Clause 6 |
| 4 | >>>Access Category | ELEMENT | FALSE | accessCategory IE in TS 38.331 [22] Sec 6 | |
| 5 | >>>Barring Info Set Index | ELEMENT | FALSE | UAC-BarringInfoSet Index IE in TS 38.331 [22] Clause 6 | |
| 6 | >UAC Barring for PLMN List | LIST | | | uac-BarringPerPL MN-List IE in TS 38.331 [22] Clause 6 |
| 7 | >>UAC-BarringPerPLMN | STRUC TURE | | | UAC-BarringPerPL MN IE in TS 38.331 [22] Sec 6 |
| 8 | >>>PLMN Identity | ELEMENT | TRUE | 9.3.59 | |
| 9 | >>>CHOICE UAC AC Barring List Type | STRUCTURE | | | Uac-ACBarringLis tType IE in TS 38.331 [22] Sec 6 |
| 10 | >>>>UAC Implicit AC Barring List | LIST | | | uac-ImplicitACBa rringList IE in TS 38.331 [22] Clause 6 |
| 11 | >>>>>UAC Implicit AC Barring Item | STRUCTURE | | | |
| 12 | >>>>>>UAC Barring Info Set Index | ELEMENT | FALSE | UAC-BarringInfoSet Index IE in TS 38.331 [22] Sec 6 | |
| 13 | >>>>UAC Explicit AC Barring List | LIST | | | uac-ExplicitACBa rringList IE in TS 38.331 [22] Clause 6 |
| 14 | >>>>>Barring Per Cat | STRUCTURE | | | UAC-BarringPerCat IE in TS 38.331 [22] Clause 6 |
| 15 | >>>>>>Access Category | ELEMENT | FALSE | accessCategory IE in TS 38.331 [22] Sec 6 | |
| 16 | >>>>>>Barring Info Set Index | ELEMENT | FALSE | UAC-BarringInfoSet Index IE in TS 38.331 [22] Clause 6 | |
| 17 | >UAC Barring Info Set List | LIST | | | UAC-BarringInfoSe tList IE in TS 38.331 [22] Sec 6 |
| 18 | >>UAC Barring Info Set Item | STRUCTURE | | | UAC-BarringInfoSet IE in TS 38.331 [22] Clause 6 |
| 19 | >>>UAC Barring Factor | ELEMENT | FALSE | uac-BarringFactor IE in TS 38.331 [22] Sec 6 | |
| 20 | >>>UAC Barring Time | ELEMENT | FALSE | uac-BarringTime IE in TS 38.331 [22] Sec 6 | |
| 21 | >>>UAC Barring For Access Identity | ELEMENT | FALSE | uac-BarringForAccessIdentity in TS 38.331 [22] Clause 6 | |
| 22 | >CHOICE Access Category 1 - Selection Assistance Info | STRUCTURE | | | uac-AccessCatego ry1-SelectionAssis tanceInfo IE in TS 38.331 [22] Sec 6 |
| 23 | >>PLMN Common | ELEMENT | FALSE | UAC-AccessCategor y1-SelectAssistan ceInfo IE in TS 38.331 [22] Clause 6 | |
| 24 | >>Individual PLMN List | LIST | | | individualPL MNList IE in TS 38.331 [22] Clause 6 |
| 25 | >>>PLMN Item | STRUCTURE | | | |
| 26 | >>>>UAC Access Category 1 Selection Assistance Info | ELEMENT | FALSE | UAC-AccessCategor y1-SelectAssistan ceInfo IE in TS 38.331 [22] Clause 6 | |
| 27 | Cell Access Control Barring Info | STRUCTURE | | | |
| 28 | > List of Control plmn-Identity | LIST | | | |
| 29 | >> plmn-Identity | ELEME NT | | 9.3.59 | |
| 30 | >>List of Control cells | LIST | | | |
| 31 | >>>CHOICE Cell Type | STRUCTURE | | | |
| 32 | >>>>NR Cell | STRUCTURE | | 8.1.1.1 | NR IE in TS 38.423 [15] Clause 9.2.3.25 |
| 33 | >>>>>NR CGI | ELEMENT | | NR CGI IE in TS 38.423 [15] Clause 9.2.2.7 | Cell Corresponding to same PLMN |
| 34 | >>>>E-UTRA Cell | STRUCTURE | | 8.1.1.2 | E-UTRA IE in TS 38.423 [15] Clause 9.2.3.25 |
| 35 | >>>>>EUTAN CGI | ELEMENT | | E-UTRA CGI IE in TS 38.423 [15] Clause 9.2.2.8 | |
| 36 | >>> cellBarred | ELEMENT | | | Indicated in the MIB message, applicable to all PLMNs when multiple PLMNs are in SIB1. When set to 'barred', the cell is barred for all UEs including emergency calls. Please refer to TS 38.331 [22]. |
| 37 | >>> intraFreqReselection | ELEMENT | | | Indicated in MIB message. |
| | | | | | It controls cell selection/resel ection to intra-frequency cells when the highest-ranked cell is barred or treated as barred by the UE. In the case of multiple PLMNs indicated in SIB1, this field is common for all PLMNs. |
| | | | | | Please refer to TS 38.331 [22]. |
| 38 | >> cellReservedForOperato rUse | ELEMENT | | | Indicated in SIB1 message, per-PLMN configuration. When set to 'reserved', the cell is treated as a candidate by the UE with access identity (i.e.) 11 and 15 operating in their HPLMN/EHP LMN. UEs assigned to an Access Identity 0, 1, 2 and 12 to 14 shall behave as if the cell status is "barred" for the registered PLMN or the selected PLMN. Please refer to TS 38.331 [22]. |
| 39 | >> cellReservedForOtherUse | | | | Indicated in SIB1 message, applicable to all PLMNs indicated in SIB1. Please refer to TS 38.331 [22]. |

For example, in [Table 28], "cellBarred" corresponding to a case that the RAN parameter ID is 36 may correspond to "cellBarred" of [Table 26]. The Near-RT RIC 640 may transmit, to the E2 node 610, a RIC control request message (e.g., a RIC control request message in which the RIC style type is set to "4" (Radio access control) and the control action ID is set to "3" (Access barring control)) for the access barring. The RIC control request message may include "cellBarred". "cellBarred" may indicate whether a corresponding cell is barred.

For example, in [Table 28], "cellBarred" corresponding to a case that the RAN parameter ID is 37 may correspond to "intraFreqReselection" of [Table 26]. The Near-RT RIC 640 may transmit, to the E2 node 610, a RIC control request message (e.g., a RIC control request message in which the RIC style type is set to "4" (Radio access control) and the control action ID is set to "3" (Access barring control)) for the access barring. The RIC control request message may include "intraFreqReselection". "intraFreqReselection" may indicate whether a corresponding cell is barred. In a case that a highest ranked cell is barred, "intraFreqReselection" may indicate whether cell selection and/or cell reselection for an intra-frequency cell is allowed.

For example, in [Table 28], "cellReservedForOperatorUse" corresponding to a case that the RAN parameter ID is 38 may correspond to "cellReservedForOperatorUse" of [Table 27]. The Near-RT RIC 640 may transmit, to the E2 node 610, a RIC control request message (e.g., a RIC control request message in which the RIC style type is set to "4" (Radio access control) and the control action ID is set to "3" (Access barring control)) for the access barring. The RIC control request message may include "cellReservedForOperatorUse". "cellReservedForOperatorUse" may indicate whether a corresponding cell is reserved for operator use.

For example, in [Table 28], "cellReservedForOtherUse" corresponding to a case that the RAN parameter ID is 39 may correspond to "cellReservedForOtherUse" of [Table 27]. The Near-RT RIC 640 may transmit, to the E2 node 610, a RIC control request message (e.g., a RIC control request message in which the RIC style type is set to "4" (Radio access control) and the control action ID is set to "3" (Access barring control)) for the access barring. The RIC control request message may include "cellReservedForOtherUse". "cellReservedForOtherUse" may indicate whether a corresponding cell is reserved for all PLMNs.

In addition to the parameters described above, a parameter related to access barring that has recently been introduced for network energy saving may also be designated as a RAN parameter. For example, SIB1 of Release 18 may include "cellBarredNES-r18". A terminal supporting energy saving (hereinafter, an energy-saving terminal) may continue to perform an access procedure for a corresponding cell even if the "cellBarred" IE of the MIB is set to a "barred" value. When such an energy-saving terminal obtains "cellBarredNES-r18" from the SIB1, the energy-saving terminal may perform the access procedure for the cell. However, in a case that the energy-saving terminal fails to receive "cellBarredNES-r18" from the SIB1 (e.g., "cellBarredNES-r18" being absent in the SIB1), the energy-saving terminal may identify that the cell is barred. The energy-saving terminal may perform cell reselection to other cells having the same frequency as the cell. "cellBarredNES-r18" is indicated in the SIB1 message, and, in a case of multiple public land mobile networks (PLMNs) or non-public networks (NPNs) indicated in the SIB1, the field is common to all PLMNs and/or NPNs. The IE may be applied only to a UE capable of NES cell DTX/RTX. In other words, "cellBarredNES-r18" represents a cell barring state for a UE supporting "nes-CellDTX-DRX". For example, the RAN parameters for the access barring may be defined as follows.

**[Table 29]**

| RAN Parameter ID | RAN Parameter | RAN Parameter Value Type | Key Param | RAN Parameter Definition | Semantics Description |
|---|---|---|---|---|---|
| 1 | Unified Access Control Barring Info | STRUCTURE | | | uac-BarringInfo IE in TS 38.331 [22] Sec 6 |
| 2 | >UAC Barring for Common List | LIST | | | uac-BarringForCo mmon IE in TS 38.331 [22] Sec 6 |
| 3 | >>Barring Per Cat | STRUCTURE | | | UAC-BarringPerCat IE in TS 38.331 [22] Clause 6 |
| 4 | >>>Access Category | ELEMENT | FALSE | accessCategory IE in TS 38.331 [22] Sec 6 | |
| 5 | >>>Barring Info Set Index | ELEMENT | FALSE | UAC-BarringInfoSet Index IE in TS 38.331 [22] Clause 6 | |
| 6 | >UAC Barring for PLMN List | LIST | | | uac-BarringPerPL MN-List IE in TS 38.331 [22] Clause 6 |
| 7 | >>UAC-BarringPerPLMN | STRUCTURE | | | UAC-BarringPerPL MN IE in TS 38.331 [22] Sec 6 |
| 8 | >>>PLMN Identity | ELEMENT | TRUE | 9.3.59 | |
| 9 | >>>CHOICE UAC AC Barring List Type | STRUCTURE | | | Uac-ACBarringLis tType IE in TS 38.331 [22] Sec 6 |
| 10 | >>>>UAC Implicit AC Barring List | LIST | | | uac-ImplicitACBa rringList IE in TS 38.331 [22] Clause 6 |
| 11 | >>>>>UAC Implicit AC Barring Item | STRUC TURE | | | |
| 12 | >>>>>>UAC Barring Info Set Index | ELEME NT | FA LS E | UAC-BarringInfoSet Index IE in TS 38.331 [22] Sec 6 | |
| 13 | >>>>UAC Explicit AC Barring List | LIST | | | uac-ExplicitACBa rringList IE in TS 38.331 [22] Clause 6 |
| 14 | >>>>>Barring Per Cat | STRUCTURE | | | UAC-BarringPerCat IE in TS 38.331 [22] Clause 6 |
| 15 | >>>>>>Access Category | ELEMENT | FALSE | accessCategory IE in TS 38.331 [22] Sec 6 | |
| 16 | >>>>>>Barring Info Set Index | ELEMENT | FALSE | UAC-BarringInfoSet Index IE in TS 38.331 [22] Clause 6 | |
| 17 | >UAC Barring Info Set List | LIST | | | UAC-BarringInfoSe tList IE in TS 38.331 [22] Sec 6 |
| 18 | >>UAC Barring Info Set Item | STRUCTURE | | | UAC-BarringInfoSe t IE in TS 38.331 [22] Clause 6 |
| 19 | >>>UAC Barring Factor | ELEMENT | FALSE | uac-BarringFactor IE in TS 38.331 [22] Sec 6 | |
| 20 | >>>UAC Barring Time | ELEMENT | FALSE | uac-BarringTime IE in TS 38.331 [22] Sec 6 | |
| 21 | >>>UAC Barring For Access Identity | ELEMENT | FALSE | uac-BarringForAcc essIdentity in TS 38.331 [22] Clause 6 | |
| 22 | >CHOICE Access Category 1 - Selection Assistance Info | STRUCTURE | | | uac-AccessCatego ry1-SelectionAssis tanceInfo IE in TS 38.331 [22] Sec 6 |
| 23 | >>PLMN Common | ELEMENT | FALSE | UAC-AccessCategor y1-SelectAssistan ceInfo IE in TS 38.331 [22] Clause 6 | |
| 24 | >>Individual PLMN List | LIST | | | individualPL MNList IE in TS 38.331 [22] Clause 6 |
| 25 | >>>PLMN Item | STRUCTURE | | | |
| 26 | >>>>UAC Access Category 1 Selection Assistance Info | ELEMENT | FALSE | UAC-AccessCategor y1-SelectAssistan ceInfo IE in TS 38.331 [22] Clause 6 | |
| 27 | Cell Access Control Barring Info | STRUCTURE | | | |
| 28 | > List of Control plmn-Identity | LIST | | | |
| 29 | >> plmn-Identity | ELEMENT | | 9.3.59 | |
| 30 | >>List of Control cells | LIST | | | |
| 31 | >>>CHOICE Cell Type | STRUCTURE | | | |
| 32 | >>>>NR Cell | STRUCTURE | | 8.1.1.1 | NR IE in TS 38.423 [15] Clause 9.2.3.25 |
| 33 | >>>>>NR CGI | ELEMENT | | NR CGI IE in TS 38.423 [15] Clause 9.2.2.7 | Cell Correspondin g to same PLMN |
| 34 | >>>>E-UTRA Cell | STRUCTURE | | 8.1.1.2 | E-UTRA IE in TS 38.423 [15] Clause 9.2.3.25 |
| 35 | >>>>>EUTAN CGI | ELEMENT | | E-UTRA CGI IE in TS 38.423 [15] Clause 9.2.2.8 | |
| 36 | >>> cellBarred | ELEMENT | | | Indicated in the MIB message, applicable to all PLMNs when multiple PLMNs are in SIB1. When set to 'barred', the cell is barred for all UEs including emergency calls. Please refer to TS 38.331 [22]. |
| 37 | >>> intraFreqReselection | ELEMENT | | | Indicated in MIB message. It controls cell selection/resel ection to intra-frequency cells when the highest-ranked cell is barred or treated as barred by the UE. In the case of multiple PLMNs indicated in SIB1, this field is common for all PLMNs. |
| | | | | | Please refer to TS 38.331 [22]. |
| 38 | >> cellReservedForOperatorUse | ELEMENT | | | Indicated in SIB1 message, per-PLMN configuration. |
| | | | | | When set to 'reserved', the cell is treated as a candidate by the UE with access identity (i.e.) 11 and 15 operating in their HPLMN/EHP LMN. UEs assigned to an Access Identity 0, 1, 2 and 12 to 14 shall behave as if the cell status is "barred" for the registered PLMN or the selected PLMN. Please refer to TS 38.331 [22]. |
| 39 | >> cellReservedForOtherUse | | | | Indicated in SIB1 message, applicable to all PLMNs indicated in SIB1. Please refer to TS 38.331 [22]. |
| 40 | >> cellBarredNES-r18 | | | | The presence of this field indicates that the cell is allowed for UEs supporting NES cell DTX/DRX. |
| | | | | | Please refer to TS 38.331 [22]. |

In the present disclosure, an example in which corresponding parameters are included in a RIC control request message of the RIC control procedure in the E2 service model corresponding to RAN Control has been described, but embodiments of the present disclosure are not limited thereto. In a case that parameters (e.g., at least a portion of the parameters of [Table X] and at least some of the parameters of [Table Y]) related to the access barring are transmitted on an E2 interface, it may be understood as an embodiment of the present disclosure.

### II. CONTROL HEADER FORMAT

The control header format (e.g., "RIC Control Header" IE) of the RIC control request message may be one of various formats. The RIC control header IE of the RIC control request message may use a designated format. For example, examples of the format are as follows.

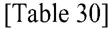

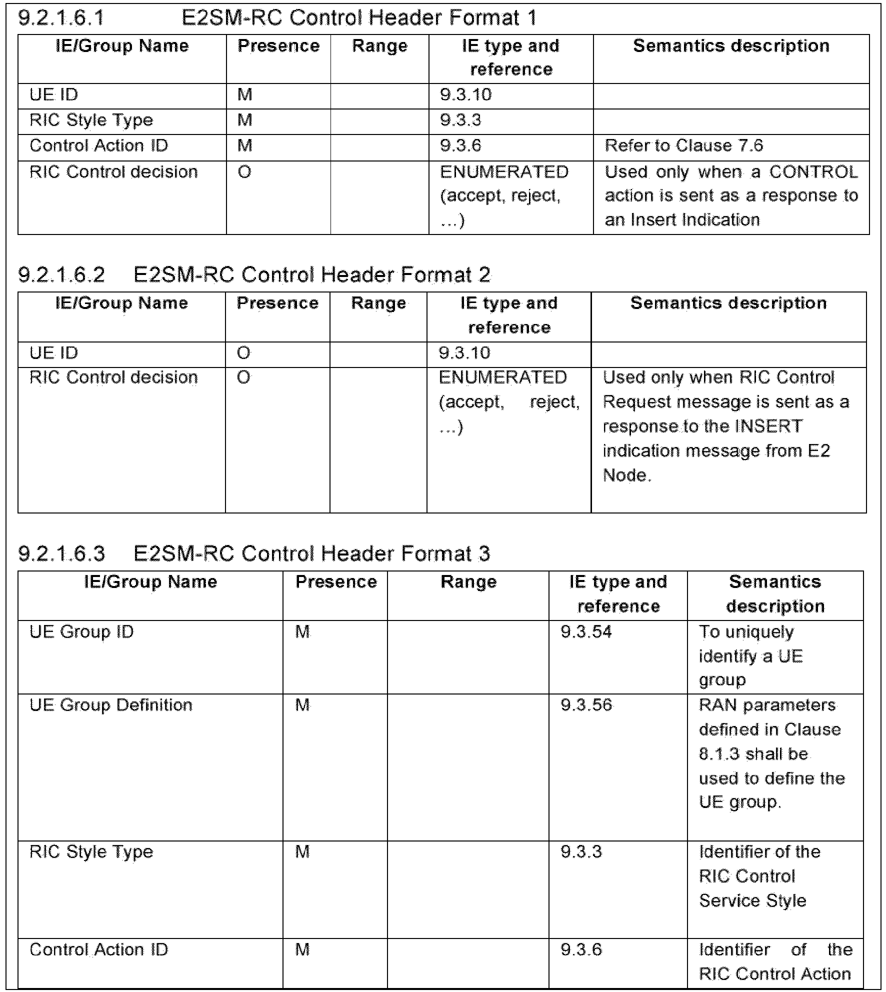

According to an embodiment, in a case of the RIC control request message for the access barring, the RIC control request message may include the "RIC Control Header" IE corresponding to "E2SM-RC Control Header Format 1" of [Table 30] described below. Meanwhile, in a case that a UE ID is mandatorily included, since a parameter is provided a UE basis in access barring performed on a cell basis, there is an aspect disadvantageous to signaling. Also in "E2SM-RC Control Header Format 3," as a UE Group ID is mandatorily included in a header, there is an aspect inappropriate for access barring performed on a cell basis. Considering that all the parameters related to the access barring described in the present disclosure are included in the MIB and the SIB1 and are cell-specific, the UE ID may be unnecessary. According to an embodiment, as a header format of the RIC control request message for the access barring, "E2SM-RC Control Header Format 2" of [Table 30] may be used. Through this, a "mandatory" constraint related to the UE ID or the UE Group ID included in a control header may be avoided.

The RAN parameters for the access barring described through [Table 26], [Table 27], [Table 28], and [Table 29] are cell-specific. According to an embodiment, the RIC control request message may include cell information (e.g., cell identification information, a cell ID, a physical cell identity (PCI), or a cell global identity (CGI)). Referring to [Table 30], since a control header format including a cell ID is not currently defined, the cell ID may be included in a form of the RAN parameter. In other words, since the access barring parameter(s) of the MIB and the SIB1 need to be defined for each cell in a body (e.g., the RIC Control Message IE) of the control message, cell information (e.g., cell identification information, a cell ID, a CGI, or a PCI) may be supported in a form of the RAN parameter. For example, the RAN parameter as follows may be defined for the access barring.

**[Table 31]**

| RAN Parameter ID | RAN Parameter | RAN Parameter Value Type | Key Param | RAN Parameter Definition | Semantics Description |
|---|---|---|---|---|---|
| Z | Target Cell ID | STRUCTURE | | | This is for the target cell for access cotrol. |
| | | | | | The structuring of this parameter is based on Target Cell Global ID IE in TS 38.423 [15] clause 9.2.3.25 |

For example, the Target Cell ID of [Table 31] may be in a form of a CGI as a cell that is a target of access control. As an example, the target cell ID may include an NR CGI. As another example, the CGI may include an E-UTRA CGI. According to an embodiment, the target cell ID may be included in a control request message (e.g., the RIC Control Request message) together with at least one of the RAN parameters (e.g., cellBarred and intraFreqReselection in the MIB, and cellReservedForOperatorUse-per-PLMN-config-List and cellReservedForOtherUse in the SIB1) of [Table 26] and/or [Table 27].

According to an embodiment, the RIC control request message may use a new control header format instead of an existing control header format. For example, for the new control header format, the table below may be referred to.

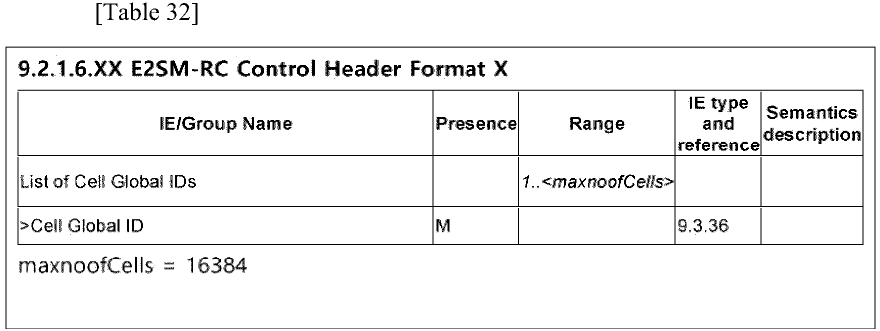

For example, for the new control header format, the table below may be referred to.

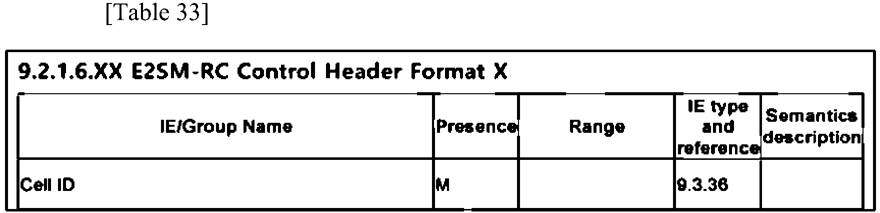

At least one of the control header formats described above may be used for at least one of the RAN parameter(s) (e.g., the parameters µ of [Table 26], [Table 27], [Table 28], and [Table 29]) described in the present disclosure. That is, this is because the descriptions regarding the control header formats relate to the "RIC Control Header" IE in the RIC control request message, and the descriptions regarding the RAN parameters for the access barring relate to the "RIC Control Message" IE, and thus are compatible. For example, a RIC control request message having a "RIC Control Header" IE including a target cell ID and a "RIC Control Message" IE including "cellBarred" of the MIB may be understood as an embodiment of the present disclosure.

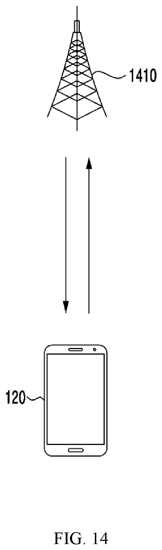

FIG. 14 illustrates an example of a radio access network.

Referring to FIG. 14, FIG. 14 illustrates a base station 1410 (e.g., the base station 110 of FIG. 1 or the base station 203 of FIG. 2) and a terminal 120, as a portion of nodes using a radio channel in a wireless communication system. Although FIG. 14 illustrates only one base station, the wireless communication system may further include another base station that is the same as or similar to the base station 1410. As an example, the base station 1410 may correspond to a transmission device, and the terminal 120 may correspond to a reception device. As another example, the base station 1410 may correspond to a reception device, and the terminal 120 may correspond to a transmission device.

The base station 1410 is a network infrastructure that provides wireless access to the terminal 120. The base station 1410 has coverage defined based on a distance in which a signal may be transmitted. In addition to a "base station," the base station 1410 may be referred to as an "access point (AP)," a "radio access network (RAN) node," an "eNodeB (eNB)," a "5th generation node (5G node)," a "next generation nodeB (gNB)," a "wireless point," a "transmission/reception point (TRP)," a "communication node," a "wireless communication device," a "wireless communication equipment," a "network node," a "network entity," or another term having an equivalent technical meaning thereto.

The base station 1410 may be implemented as one entity or may also be implemented through a plurality of entities. Conventionally, in a communication system in which a cell radius of a base station is relatively large, each base station (e.g., the base station 1410) has been installed such that each base station includes functions of a digital processing unit (or a distributed unit (DU)) and a radio frequency (RF) processing unit (or a radio unit (RU)). However, as a highfrequency band is used in a 4th generation (4G) and/or a subsequent communication system (e.g., 5G) and cell coverage of a base station becomes smaller, the number of base stations for covering a specific region has increased. An installation cost burden of an operator for installing the base stations has also increased. In order to minimize an installation cost of a base station, a structure has been proposed in which the DU and the RU of the base station are separated, one or more RUs are connected to one DU through a wired network, and one or more geographically distributed RUs are deployed to cover the specific region. In addition, the base station 1410 may be implemented in a distributed deployment according to a centralized unit (CU) configured to perform functions of upper layers (e.g., a packet data convergence protocol (PDCP) layer and a radio resource control (RRC) layer) of an access network and a distributed unit (DU) configured to perform functions of lower layers. At this time, the distributed unit (DU) may include a digital unit (DU) and a radio unit (RU). Between a core network (e.g., a 5G core (5GC) or a next generation core (NGC)) and a radio access network (RAN), the base station may be implemented in a structure in which the CU, the DU, and the RU are disposed in that order. An interface between the CU and the distributed unit (DU) may be referred to as an F1 interface. The implementation scenarios described above are exemplary, and a specific implementation is not construed as limiting embodiments of the present disclosure. For example, an eNB or a gNB in which the base station 1410 operates as an independent node may correspond to an E2 node 610. For example, in a distributed deployment, the DU or the CU as a component of the base station 1410 may correspond to the E2 node 610.

The terminal 120, which is a device used by a user, performs communication with the base station 1410 through a radio channel. A link directed from the base station 1410 toward the terminal 120 is referred to as a downlink (DL), and a link directed from the terminal 120 toward the base station 1410 is referred to as an uplink (UL). In addition, although not illustrated in FIG. 14, the terminal 120 and another terminal may perform communication with each other through a radio channel. At this time, a link between the terminal 120 and the another terminal (a device-to-device link (D2D)) is referred to as a sidelink, and the sidelink may be used interchangeably with a PC5 interface. In some other embodiments, the terminal 120 may be operated without involvement of the user. According to an embodiment, the terminal 120 is a device that performs machine type communication (MTC) and may not be carried by the user. In addition, according to an embodiment, the terminal 120 may be a narrowband (NB) - Internet of Things (IoT) device.

In addition to a "terminal," the terminal 120 may be referred to as a "user equipment (UE)," a "customer premises equipment (CPE)," a "mobile station," a "subscriber station," a "remote terminal," a "wireless terminal," an "electronic device," a "user device," or another term having an equivalent technical meaning thereto.

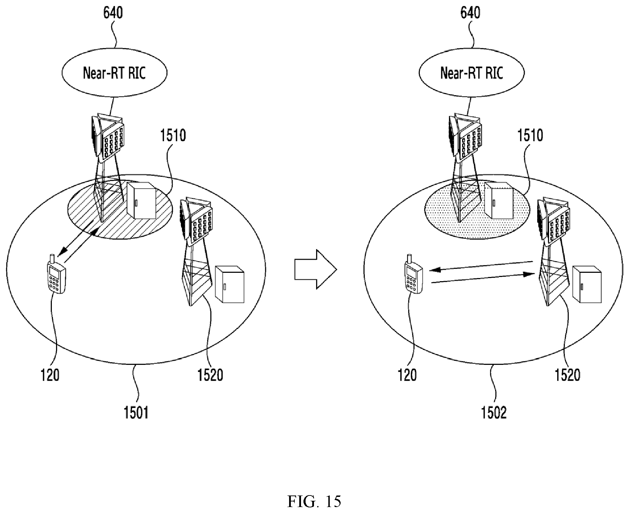

FIG. 15 illustrates an example of access barring for energy saving.

Referring to FIG. 15, in an example 1501, a terminal 120 may be accessing a first cell 1510. An E2 node (e.g., an E2 node 610) (e.g., a gNB) providing the first cell 1510 may be connected to a Near-RT RIC 640. The terminal 120 may not access an E2 node providing a second cell 1520. According to an embodiment, the E2 node 610 and the Near-RT RIC 640 may perform an E2 setup procedure. For example, the E2 node 610 may transmit, to the Near-RT RIC 640, an E2 setup request message including a RAN function associated with E2SM-RC and/or E2SM-CCC. The Near-RT RIC 640 may transmit an E2 setup response message to the E2 node 610. According to an embodiment, the E2 node 610 and the Near-RT RIC 640 may perform a RIC subscription procedure. For example, the Near-RT RIC 640 may transmit, to the E2 node 610, a RIC subscription request message including a RIC subscription associated with energy saving. The E2 node 610 may transmit a RIC subscription response message to the Near-RT RIC 640. According to an embodiment, the Near-RT RIC 640 may transmit a RIC control request message to the E2 node 610. The RIC control request message may include at least one parameter related to access barring of the first cell 1510. The at least one parameter may include a parameter to be broadcast in an MIB on the first cell 1510 and/or a parameter to be broadcast in SIB1 on the first cell 1510. For example, the at least one parameter may include at least one of "cellBarred," "intraFreqReselection," "cellReservedForOtherUse," and/or "cellReservedForOperatorUse". As an example, the Near-RT RIC 640 may transmit, to the E2 node 610, a RAN parameter in which a value of "cellBarred" is set to "barred". According to control of the E2 node 610, the first cell 1510 may be barred.

In an example 1502, it may be difficult for the terminal 120 to access the first cell 1510 anymore. For example, the terminal 120 may perform cell selection or cell reselection. For example, the terminal 120 may perform a handover. The terminal 120 may perform an access procedure on the second cell 1520. As access to the first cell 1510 is barred, the number of terminals accessing the first cell 1510 may decrease. Accordingly, power consumption related to the first cell 1510 in the E2 node 610 may decrease.

In embodiments, a method performed by a near-real time (RT) radio access network intelligence controller (RIC) is provided. The method may comprise generating a RIC control request message including a RIC control header information element (IE) and a RIC control message IE, and transmitting, to an E2 node, the RIC control request message. The RIC control header IE may include a RIC style type set to a value indicating radio access control and a control action identifier (ID) set to a value indicating access barring control. The RIC control message IE may include one or more radio access network (RAN) parameters related to the access barring control. The one or more RAN parameters may include at least one of a parameter indicating whether a cell (e.g., a cell provided by the E2 node) is barred, a parameter for controlling cell selection and/or cell reselection for an intra-frequency cell in a case that a highest ranked cell (e.g., a cell provided by the E2 node) is barred, a parameter indicating whether a cell (e.g., a cell provided by the E2 node) is reserved for operator use, or a parameter indicating whether a cell (e.g., a cell provided by the E2 node) is reserved for all public land mobile networks (PLMNs).

For example, the RIC style type may be set to '4', which is a value indicating the radio access control. The control action ID may be set to '3', which is a value indicating the access barring control. The RIC control request message may include a RAN function identifier (ID). An object identifier (OID) associated with the RAN function ID may indicate E2 service model (E2SM)-RAN control (RC).

For example, the method may comprise receiving, from the E2 node, an E2 setup request message, and transmitting, to the E2 node, an E2 setup response message in response to the E2 setup request message. The E2 setup request message may include the RAN function ID and the OID associated with the RAN function ID.

For example, the one or more RAN parameters may include at least one PLMN identity. The parameter indicating whether the cell is barred may be related to all PLMNs. The parameter indicating whether the cell is reserved for operator use may be indicated for each PLMN configuration.

For example, the one or more RAN parameters may include a cell global identity (CGI) indicating the cell for the access barring control. For example, the parameter indicating whether the cell is barred may correspond to a 'cellBarred' IE for use in a master information block (MIB). The parameter for controlling the cell selection and/or the cell reselection may correspond to an 'intraFreqReselection' IE for use in the MIB. The parameter indicating whether the cell is reserved for operator use may correspond to a 'cellReservedForOperatorUse' IE for use in a system information block (SIB) 1. The parameter indicating whether the cell is reserved for all public land mobile networks (PLMNs) may correspond to a 'cellReservedForOtherUse' IE for use in the SIB 1.

In embodiments, a method performed by an E2 node is provided. The method may comprise receiving, from a near-real time (RT) radio access network intelligence controller (RIC), a RIC control request message including a RIC control header information element (IE) and a RIC control message IE, and performing a procedure related to access barring control based on the RIC control request message. The RIC control header IE may include a RIC style type set to a value indicating radio access control and a control action identifier (ID) set to a value indicating the access barring control. The RIC control message IE may include one or more radio access network (RAN) parameters related to the access barring control. The one or more RAN parameters may include at least one of a parameter indicating whether a cell (e.g., a cell provided by the E2 node) is barred, a parameter for controlling cell selection and/or cell reselection for an intra-frequency cell in a case that a highest ranked cell (e.g., a cell provided by the E2 node) is barred, a parameter indicating whether a cell (e.g., a cell provided by the E2 node) is reserved for operator use, or a parameter indicating whether a cell (e.g., a cell provided by the E2 node) is reserved for all public land mobile networks (PLMNs).

For example, the RIC style type may be set to '4', which is a value indicating the radio access control. The control action ID may be set to '3', which is a value indicating the access barring control. The RIC control request message may include a RAN function identifier (ID). An object identifier (OID) associated with the RAN function ID may indicate E2 service model (E2SM)-RAN control (RC).

For example, the method may further comprise transmitting, to the Near-RT RIC, an E2 setup request message, and receiving, from the E2 node, an E2 setup response message corresponding to the E2 setup request message. The E2 setup request message may include the RAN function ID and the OID associated with the RAN function ID.

For example, the one or more RAN parameters may include at least one PLMN identity. The parameter indicating whether the cell is barred may be related to all PLMNs. The parameter indicating whether the cell is reserved for operator use may be indicated for each PLMN configuration.

For example, the one or more RAN parameters may include a cell global identity (CGI) indicating the cell for the access barring control. For example, the parameter indicating whether the cell is barred may correspond to a 'cellBarred' IE for use in a master information block (MIB). The parameter for controlling the cell selection and/or the cell reselection may correspond to an 'intraFreqReselection' IE for use in the MIB. The parameter indicating whether the cell is reserved for operator use may correspond to a 'cellReservedForOperatorUse' IE for use in a system information block (SIB) 1. The parameter indicating whether the cell is reserved for all public land mobile networks (PLMNs) may correspond to a 'cellReservedForOtherUse' IE for use in the SIB 1.

In embodiments, a near-real time (RT) radio access network intelligence controller (RIC) is provided. The Near-RT RIC may comprise at least one processor including processing circuitry; and memory including one or more storage mediums storing instructions. The instructions, when executed by the at least one processor, may cause the Near-RT RIC to generate a RIC control request message including a RIC control header information element (IE) and a RIC control message IE, and transmit the RIC control request message to an E2 node. The RIC control header IE may include a RIC style type set to a value indicating radio access control and a control action identifier (ID) set to a value indicating access barring control. The RIC control message IE may include one or more radio access network (RAN) parameters related to the access barring control. The one or more RAN parameters may include at least one of a parameter indicating whether a cell (e.g., a cell provided by the E2 node) is barred, a parameter for controlling cell selection and/or cell reselection for an intra-frequency cell in a case that a highest ranked cell (e.g., a cell provided by the E2 node) is barred, a parameter indicating whether a cell (e.g., a cell provided by the E2 node) is reserved for operator use, or a parameter indicating whether a cell (e.g., a cell provided by the E2 node) is reserved for all public land mobile networks (PLMNs).

For example, the RIC style type may be set to '4', which is a value indicating the radio access control. The control action ID may be set to '3', which is a value indicating the access barring control. The RIC control request message may include a RAN function identifier (ID). An object identifier (OID) associated with the RAN function ID may indicate E2 service model (E2SM)-RAN control (RC).

For example, the instructions, when executed by the at least one processor, may cause the Near-RT RIC to receive, from the E2 node, an E2 setup request message, and transmit, to the E2 node, an E2 setup response message in response to the E2 setup request message. The E2 setup request message may include the RAN function ID and the OID associated with the RAN function ID.

For example, the one or more RAN parameters may include at least one PLMN identity. The parameter indicating whether the cell is barred may be related to all PLMNs. The parameter indicating whether the cell is reserved for operator use may be indicated for each PLMN configuration.

For example, the one or more RAN parameters may include a cell global identity (CGI) indicating the cell for the access barring control. For example, the parameter indicating whether the cell is barred may correspond to a 'cellBarred' IE for use in a master information block (MIB). The parameter for controlling the cell selection and/or the cell reselection may correspond to an 'intraFreqReselection' IE for use in the MIB. The parameter indicating whether the cell is reserved for operator use may correspond to a 'cellReservedForOperatorUse' IE for use in a system information block (SIB) 1. The parameter indicating whether the cell is reserved for all public land mobile networks (PLMNs) may correspond to a 'cellReservedForOtherUse' IE for use in the SIB 1.

In embodiments, a network apparatus providing functions of an E2 node is provided. The network apparatus may comprise at least one processor including processing circuitry; and memory including one or more storage mediums storing instructions. The instructions, when executed by the at least one processor, may cause the network apparatus to receive, from a near-real time (RT) radio access network intelligence controller (RIC), a RIC control request message including a RIC control header information element (IE) and a RIC control message IE, and perform a procedure related to access barring control based on the RIC control request message. The RIC control header IE may include a RIC style type set to a value indicating radio access control and a control action identifier (ID) set to a value indicating the access barring control. The RIC control message IE may include one or more radio access network (RAN) parameters related to the access barring control. The one or more RAN parameters may include at least one of a parameter indicating whether a cell (e.g., a cell provided by the network apparatus) is barred, a parameter for controlling cell selection and/or cell reselection for an intra-frequency cell in a case that a highest ranked cell (e.g., a cell provided by the network apparatus) is barred, a parameter indicating whether a cell (e.g., a cell provided by the network apparatus) is reserved for operator use, or a parameter indicating whether a cell (e.g., a cell provided by the network apparatus) is reserved for all public land mobile networks (PLMNs).

For example, the RIC style type may be set to '4', which is a value indicating the radio access control. The control action ID may be set to '3', which is a value indicating the access barring control. The RIC control request message may include a RAN function identifier (ID). An object identifier (OID) associated with the RAN function ID may indicate E2 service model (E2SM)-RAN control (RC).

For example, the instructions, when executed by the at least one processor, may cause the network apparatus to transmit, to the Near-RT RIC, an E2 setup request message, and receive, from the Near-RT RIC, an E2 setup response message corresponding to the E2 setup request message. The E2 setup request message may include the RAN function ID and the OID associated with the RAN function ID.

For example, the one or more RAN parameters may include at least one PLMN identity. The parameter indicating whether the cell is barred may be related to all PLMNs. The parameter indicating whether the cell is reserved for operator use may be indicated for each PLMN configuration.

For example, the one or more RAN parameters may include a cell global identity (CGI) indicating the cell for the access barring control. For example, the parameter indicating whether the cell is barred may correspond to a 'cellBarred' IE for use in a master information block (MIB). The parameter for controlling the cell selection and/or the cell reselection may correspond to an 'intraFreqReselection' IE for use in the MIB. The parameter indicating whether the cell is reserved for operator use may correspond to a 'cellReservedForOperatorUse' IE for use in a system information block (SIB) 1. The parameter indicating whether the cell is reserved for all public land mobile networks (PLMNs) may correspond to a 'cellReservedForOtherUse' IE for use in the SIB 1.

For one or more embodiments, at least one of components described in one or more of the preceding drawings may be configured to perform one or more operations, techniques, processes, and/or methods as described in the present disclosure. For example, a processor (e.g., a baseband processor) described in the present disclosure in association with one or more of the preceding drawings may be configured to operate according to one or more examples described in the present disclosure. For another example, a circuit associated with user equipment (UE), a base station, a network element, or the like, as described above in association with one or more of the preceding drawings, may be configured to operate according to one or more examples described herein.

Any of the embodiments described above may be combined with any other embodiment (or a combination of embodiments) unless explicitly stated otherwise. The foregoing description of one or more implementations is provided for illustration and explanation, but is not intended to limit the scope of the embodiments or to be exhaustive to the precise forms disclosed. Modifications and variations are possible in light of the above teachings or may be obtained from practice of various embodiments.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A method performed by a near-real time (RT) radio access network intelligence controller (RIC), the method comprising:
generating a RIC control request message including a RIC control header information element (IE) and a RIC control message IE; and
transmitting, to an E2 node, the RIC control request message,
wherein the RIC control header IE includes a RIC style type set to a value indicating radio access control and a control action identifier (ID) set to a value indicating access barring control,
wherein the RIC control message IE includes one or more radio access network (RAN) parameters related to the access barring control, and
wherein the one or more RAN parameters include a parameter indicating whether a cell provided by the E2 node is barred.

2. The method of claim 1, wherein, in a case that the parameter indicates that the cell is barred, a user equipment (UE) is not allowed to camp on the cell.

3. The method of claim 1, wherein the one or more RAN parameters further include a parameter for controlling cell selection and/or cell reselection for an intra-frequency cell in a case that a highest ranked cell provided by the E2 node is barred.

4. The method of claim 3, wherein the one or more RAN parameters further include at least one of:
a parameter indicating whether a cell is reserved for operator use, or
a parameter indicating whether a cell is reserved for all public land mobile networks (PLMNs).

5. The method of claim 4,
wherein the RIC style type is set to '4', which is a value indicating the radio access control,
wherein the control action ID is set to '3', which is a value indicating the access barring control,
wherein the parameter indicating whether the cell is barred corresponds to a 'cellBarred' IE for use in a master information block (MIB),
wherein the parameter for controlling the cell selection and/or the cell reselection corresponds to an 'intraFreqReselection' IE for use in the MIB,
wherein the parameter indicating whether the cell is reserved for operator use corresponds to a 'cellReservedForOperatorUse' IE for use in a system information block (SIB) 1, and
wherein the parameter indicating whether the cell is reserved for all PLMNs corresponds to a 'cellReservedForOtherUse' IE for use in the SIB 1.

6. The method of claim 1, further comprising:
receiving, from the E2 node, an E2 setup request message; and
transmitting, to the E2 node, an E2 setup response message in response to the E2 setup request message,
wherein the E2 setup request message includes a RAN function identifier (ID) and an object identifier (OID) indicating E2 service model (E2SM)-RAN control (RC), and
wherein the RIC control request message includes the RAN function ID.

7. The method of claim 1, wherein the one or more RAN parameters include a cell global identity (CGI) indicating the cell for the access barring control.

8. A method performed by an E2 node, the method comprising:
receiving, from a near-real time (RT) radio access network intelligence controller (RIC), a RIC control request message including a RIC control header information element (IE) and a RIC control message IE,
wherein the RIC control header IE includes a RIC style type set to a value indicating radio access control and a control action identifier (ID) set to a value indicating access barring control,
wherein the RIC control message IE includes one or more radio access network (RAN) parameters related to the access barring control, and
wherein the one or more RAN parameters include a parameter indicating whether a cell provided by the E2 node is barred.

9. The method of claim 8, wherein, in a case that the parameter indicates that the cell is barred, a user equipment (UE) is not allowed to camp on the cell.

10. The method of claim 8, wherein the one or more RAN parameters further include a parameter for controlling cell selection and/or cell reselection for an intra-frequency cell in a case that a highest ranked cell provided by the E2 node is barred.

11. The method of claim 10, wherein the one or more RAN parameters further include at least one of:
a parameter indicating whether a cell is reserved for operator use, or
a parameter indicating whether a cell is reserved for all public land mobile networks (PLMNs).

12. The method of claim 11,
wherein the RIC style type is set to '4', which is a value indicating the radio access control,
wherein the control action ID is set to '3', which is a value indicating the access barring control,
wherein the parameter indicating whether the cell is barred corresponds to a 'cellBarred' IE for use in a master information block (MIB),
wherein the parameter for controlling the cell selection and/or the cell reselection corresponds to an 'intraFreqReselection' IE for use in the MIB,
wherein the parameter indicating whether the cell is reserved for operator use corresponds to a 'cellReservedForOperatorUse' IE for use in a system information block (SIB) 1, and
wherein the parameter indicating whether the cell is reserved for all PLMNs corresponds to a 'cellReservedForOtherUse' IE for use in the SIB 1.

13. The method of claim 8, further comprising:
transmitting, to the Near-RT RIC, an E2 setup request message; and
receiving, from the Near-RT RIC, an E2 setup response message corresponding to the E2 setup request message,
wherein the E2 setup request message includes a RAN function identifier (ID) and an object identifier (OID) indicating E2 service model (E2SM)-RAN control (RC),
wherein the RIC control request message includes the RAN function ID.

14. A near-real time (RT) radio access network intelligence controller (RIC), comprising:
at least one processor including processing circuitry; and
memory including one or more storage mediums storing instructions,
wherein the instructions, when executed by the at least one processor, are configured to cause the Near-RT RIC to perform any one of methods of claims 1 to 7.

15. A network apparatus for performing functions of an E2 node, comprising:
at least one processor including processing circuitry; and
memory including one or more storage mediums storing instructions,
wherein the instructions, when executed by the at least one processor, are configured to cause the network apparatus to perform any one of methods of claims 8 to 13.
